(19)

**Europäisches Patentamt**

**European Patent Office**

**Office européen des brevets**

(11) **EP 4 366 210 A1**

(12) **EUROPEAN PATENT APPLICATION**

(43) Date of publication:
**08.05.2024 Bulletin 2024/19**

(21) Application number: **22306672.1**

(22) Date of filing: **04.11.2022**

(51) International Patent Classification (IPC):
**H04L 5/00** (2006.01)    **H04L 1/1822** (2023.01)
**H04L 1/1829** (2023.01)    **H04W 4/40** (2018.01)
**H04W 76/14** (2018.01)

(52) Cooperative Patent Classification (CPC):
**H04L 5/0055;** H04L 1/1685; H04L 1/1854;
H04L 1/1861; H04W 72/25; H04W 92/18

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Mitsubishi Electric R&D Centre Europe B.V.**
  **1119 NS Schiphol Rijk Amsterdam (NL)**
  Designated Contracting States:
  **FR**
- **MITSUBISHI ELECTRIC CORPORATION**
  **Chiyoda-ku**
  **Tokyo 100-8310 (JP)**
  Designated Contracting States:
  **AL AT BE BG CH CY CZ DE DK EE ES FI GB GR HR HU IE IS IT LI LT LU LV MC ME MK MT NL NO PL PT RO RS SE SI SK SM TR**

(72) Inventor: **CIOCHINA, Cristina**
  **35708 RENNES CEDEX 7 (FR)**

(74) Representative: **Plasseraud IP**
  **66, rue de la Chaussée d'Antin**
  **75440 Paris Cedex 09 (FR)**

(54) **PSFCH TRANSMISSION WITH MIXED NUMEROLOGIES**

(57) The invention relates to a communication method implemented in a device-to-device communication system for a transmission and/or a reception of multicarrier radio signals, the communication method using a resource pool for said transmission and/or reception,

the resource pool being partitioned, in the time domain, in time intervals, each time interval comprising X multicarrier symbols with respect to a first subcarrier spacing $SCS_1$, at least a part of the X multicarrier symbols being available for data transmission in each time interval,

the resource pool being partitioned, in the frequency domain, in $L_1$ subchannels with respect to the first subcarrier spacing $SCS_1$,

the resource pool comprising sets of $N_1 * L_1$ time-frequency units, each set spanning over $N_1$ time intervals and over $L_1$ subchannels with respect to the first subcarrier spacing $SCS_1$, each set being associated to a feedback occasion comprised, in the time domain, within P multicarrier symbols with respect to the first subcarrier spacing $SCS_1$ not available for data transmission with respect to the first subcarrier spacing $SCS_1$ such as:

the feedback occasion comprises time-frequency resources with respect to a second subcarrier spacing $SCS_2$, with $SCS_2 = k_1 * SCS_1$ and $k_1 > 1$, that are contained in at least one and at most $R_{max}$ multicarrier symbols with respect to the second subcarrier spacing $SCS_2$ that are available for a feedback transmission, where $R_{max} = k_1 * P - 2$,

the feedback occasion starts at least after the end of a first guard time $guard_1$ after a multicarrier symbol available for data transmission with respect to the first subcarrier spacing $SCS_1$, and the feedback occasion ends at least before a second guard time $guard_2$ before the start time of another multicarrier symbol available for data transmission with respect to the first subcarrier spacing $SCS_1$,

400

600

602

604

606

AGC
PSSCH
PSCCH
DMRS
GUARD
AGC
PSFCH

FIG. 6

## Description

## Technical Field

This disclosure pertains to the field of telecommunications.

The disclosure more particularly relates to a communication method, to a device-to-device communication system, to a computer program, and to user equipments.

## Background Art

Device-to-device communications will migrate from LTE (Long Term Evolution) sidelink to NR (New Radio) sidelink. To ensure smooth technology transition, 3GPP is currently defining LTE/NR co-channel coexistence between the two RATs (Radio Access Technologies). The main use case is LTE/NR-V2X coexistence in ITS (Intelligent Transportation System) bands. Resource pools for LTE and NR sidelink communications may be partially or totally overlapped. LTE terminals are not aware of the presence of NR traffic. There may be no network deployment (out of coverage). In case of coexistence, the LTE V2X and the NR V2X transmissions are synchronized in time and in frequency.

Currently, LTE V2X (Vehicle-to-Everything) system uses a fixed subcarrier spacing of 15kHz and there is no possibility of having HARQ (Hybrid Automatic Repeat reQuest) feedback.

Moreover, even in the absence of LTE V2X traffic (e.g. in resource pools reserved for NR V2X only transmission), currently only a single subcarrier spacing is allowed in a resource pool, which lacks flexibility because different subcarrier spacings may be better fit for different services or QoS demands.

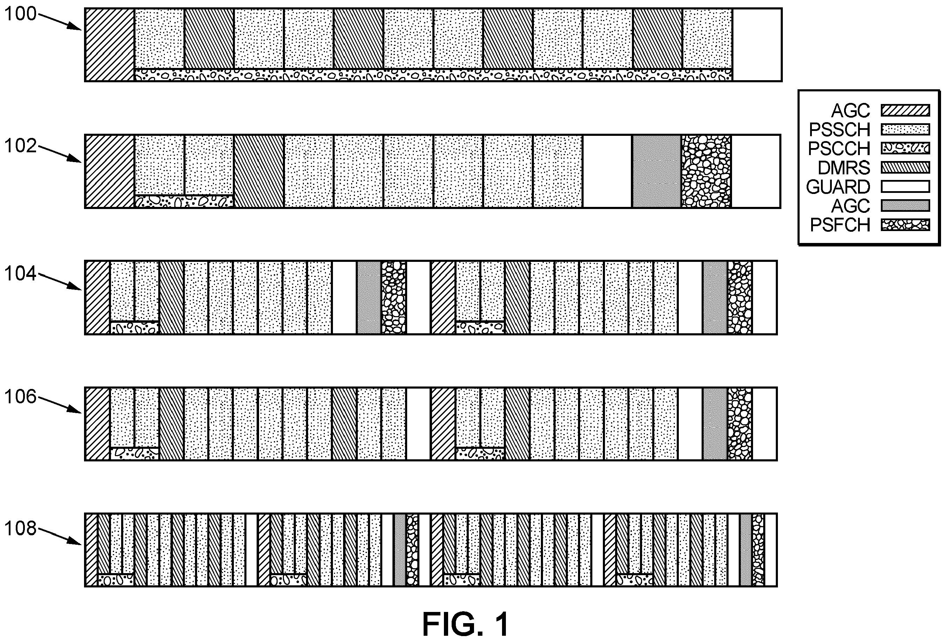

Figure 1 represents one of the typical slot structures for LTE V2X transmission and/or reception. A resource pool can be considered to be partitioned in time intervals (e.g. slots) and frequency intervals (e.g. subchannels). Figure 1 represents a time-frequency unit (100) for LTE V2X transmission and/or reception spanning over one time interval in the time domain, and spanning over one subchannel in the frequency domain. In the time domain, the time-frequency unit is composed of 14 multicarrier symbols, starting with a AGC symbol (for Automatic Gain Control, used to set the input level of the amplifier at the receiver side) and it ends with a guard symbol, allowing each user equipment a time to switch between transmission and reception.

Each time-frequency unit can be used either for transmission of for reception. The waveform used for transmission is DFT-spread-OFDM. Physical sidelink shared channel transmission and/or reception, containing mainly data, can only occur in multicarrier symbols labelled as PSSCH in the figure (e.g. PSSCH). Physical sidelink control channel transmission and/or reception, containing mainly control information, can only occur in time-frequency regions labelled as PSCCH in the figure (e.g. PSCCH). DMRS represent demodulation reference signals positions, or pilot positions, and occur in fixed positions. For simplification, in the following, we will denote by "data" any information, control, or pilot signals that can be carried by PSSCH/PSFCH or their associated AGC. By data transmission, we denote jointly PSSCH/PSCCH transmission. By time-frequency unit used for data transmission we denote the multi-carrier symbols in the frequency regions (e.g. subchannels, subcarriers, resource blocks) that can be occupied by PSSCH/PSCCH. The associated AGC may or may not be considered as included in the data transmission.

The NR system on the other hand can use 15kHz, 30kHz and 60kHz subcarrier spacings in frequency range 1 (below 6GHz). Other subcarrier spacings (e.g. 120kHz, 480kHz, 960kHz) are available in higher bands, and other values may be introduces at a later point. The waveform used for transmission is Orthogonal Frequency Division Multiplexing, OFDM. Pilot symbols DMRS may be in variable number and appear in variable positions. Usually, one resource pool is configured with a single subcarrier spacing.

To illustrate this aspect, Figure 1 also represents typical slot structures for NR V2X transmission and/or reception. A resource pool can be considered to be partitioned in time intervals (e.g. slots) and frequency intervals (e.g. subchannels). The duration of a time interval and/or the frequency span of a subchannel may depend on the subcarrier spacing. The duration of a time interval may correspond to the duration of a given number of multicarrier symbols, the given number being configured in a resource pool (e.g. 14, 13, 7, etc) or may be variable. In Figure 1, time intervals are considered to correspond to the duration of 14 multicarrier symbols with respect to a given subcarrier spacing.

Figure 1 represents a time-frequency unit (102) for NR V2X transmission and/or reception spanning over one time interval in the time domain and spanning over one subchannel in the frequency domain. In the time domain, the time-frequency unit is composed of 14 multi-carrier symbols, starting with a AGC symbol (for Automatic Gain Control, used to set the input level of the amplifier at the receiver side). A first part of the time-frequency unit may be used for data transmission/reception and it ends with a guard symbol, allowing each user equipment a time to switch between transmission and reception. A feedback channel (PSFCH, physical sidelink feedback channel) may exist, when feedback occasions are configured within a resource pool. A second part of the time-frequency unit may be used for feedback transmission/reception. In such case, the feedback channel, carrying HARQ related information, is transmitted in symbols allowed for PSFCH. The second part of the time-frequency unit starts with its own AGC symbol and ends with its own guard symbol, any intermediate symbol being used for the feedback transmission/reception. The time resources for PSFCH are (pre-)configured to occur once in every $N = 1$, $N = 2$, or $N = 4$ time intervals. It is considered that time-frequency units are aligned in such a manner that feedback occasions are aligned (occupy full multicarrier symbols in the entire resource pool). Other patterns, for example irregular PSFCH occurrence, separated in the time domain by a variable number of multicarrier symbols, or by a variable number of time intervals, or by a number of time intervals of variable time duration are also possible.

Structures in figure 1 represent possible transmission/reception of different types of information from the perspective of the communication system. Different user equipments may perform actual transmission/reception of the different types of information. For example, the first part of the time-frequency unit may be used by a first user equipment for data transmission to a second user equipment, and the second part of the time-frequency unit may be unused, or used by a third user equipment to transmit feedback to a fourth user equipment. For example, the first part of the time-frequency unit may be used by a first user equipment for data transmission to a second user equipment, and the second part of the time-frequency unit may be used by the same first user equipment to transmit feedback to a third user equipment.

In a first example, a NR time-frequency unit (102) is represented using a 15kHz subcarrier spacing, with feedback occasions including time resources for PSFCH occurring in the represented time interval.

In a second example, 2 NR consecutive time-frequency units (104) are represented using a 30kHz subcarrier spacing, with feedback occasions including time resources for PSFCH occurring once in every time interval.

In a third example, 2 NR consecutive time-frequency units intervals (106) are represented using a 30kHz subcarrier spacing, with feedback occasions including time resources for PSFCH occurring once every 2 time intervals.

In a fourth example, 4 NR consecutive time-frequency units (108) are represented using a 60kHz subcarrier spacing, with feedback occasions including time resources for PSFCH occurring once every 2 time intervals.

PSCCH transmission is usually associated with PSSCH transmission and occurs in one or several physical resource blocks over 2 or 3 multicarrier symbols. PSCCH may thus occur in specific parts of a time-frequency unit, but only one PSCCH usually exists for a PSSCH transmission occupying several subchannels. In the following, we will ignore the existence of PSCCH transmission and jointly speak about data transmission without distinguishing between PSCCH and PSSCH. From this perspective, and by ignoring the possible locations or occurrence of PSCCH, we may say in an equivalent manner that the configurations depicted on Figure 1 (100, 102, 104, 106, 108) refer to time intervals instead of time-frequency units.

PSFCH carries HARQ feedback over the sidelink from a UE (User Equipment) which is an intended recipient of a PSSCH transmission (henceforth an Rx UE) to the UE which performed the transmission (henceforth a Tx UE). PSFCH transmits a Zadoff-Chu sequence in one PRB (physical resource block) repeated over two OFDM symbols, the first of which can be used for AGC, near the end of the sidelink resource in a time interval. Frequency/code resources are derived implicitly from those used by the associated PSSCH transmission, together with the L1 identity of the UE transmitting PSSCH and, when groupcast with ACK/NACK feedback is used, the identity within the group of the UE transmitting PSFCH. In time intervals without PSFCH, the time interval can be used either for transmission of for reception. In time intervals with PSFCH, the time interval can be used for transmission only, for reception only, or for transmission and reception (e.g. a UE receives PSSCH/PSCCH in the first part of the time intervals, and then sends PSFCH (associated with a previous PSSCH/PSCCH reception) in the second part of the time interval, or vice-versa). The waveform used for transmission is OFDM. The number and positions of DMRS symbols may vary.

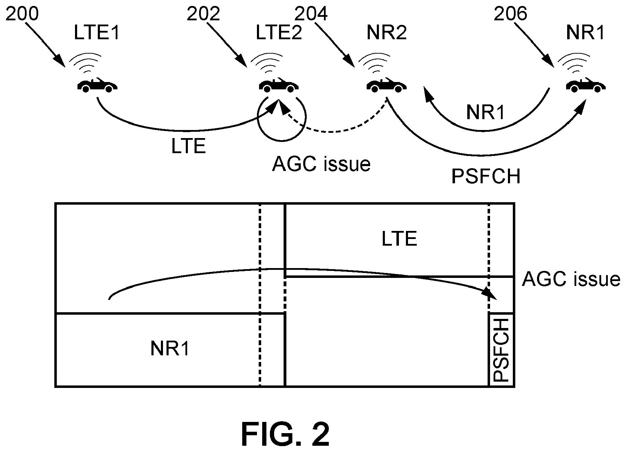

When LTE and NR V2X coexist and PSFCH is configured, PSFCH transmission may cause degradation to the LTE V2X transmission, also referred to as "AGC issue". Let us take the example of a coexistence of V2X communications using LTE and NR, as depicted in Figure 2. A LTE2 UE (202) receives from a LTE1 UE (200) an LTE frame (100) as depicted in Figure 1. Upon reception of the AGC symbol in the LTE frame, the LTE2 UE sets the input level of its amplifier at a level corresponding to the power received during AGC training. But at the end of the time interval, a NR2 UE (204), which is physically close to the LTE2 UE, starts transmitting PSFCH, associated to a previous PSSCH reception from a UE NR1 (206). We assume that NR uses the same subcarrier spacing SCS as LTE, that is 15kHz. This transmission saturates the amplifier of the UE LTE2, causing the loss of the last two multicarrier symbols (one DMRS, one data symbol, two control symbols). This severely degrades the performance of the UE LTE2. The UE LTE2 cannot anticipate this transmission because it has no capacity of detecting the coexisting NR1 and NR2 UEs.

The same situation occurs if the NR transmission is set with 30kHz subcarrier spacing (SCS). Let us assume that there is a feedback occasion every $N$ time intervals. At least one LTE symbol (data and control) is affected by the AGC issue if the NR PSFCH occasions are configured with $N = 2$ (106) and up to 3 LTE symbols are affected by the AGC issue if the NR PSFCH occasions are configured with $N = 1$ (104).

If the NR transmission is set with 60kHz SCS, if $N = 1$ or $N = 2$ similar issues occur.

In a more generic situation where a resource pool would be shared between NR users having different SCS, a similar situation occurs.

## Summary

This disclosure improves the situation.

It is proposed a communication method implemented in a device-to-device communication system for a transmission and/or a reception of multicarrier radio signals, the communication method using a resource pool for said transmission and/or reception,

> the resource pool being partitioned, in the time domain, in time intervals, each time interval comprising X multicarrier symbols with respect to a first subcarrier spacing $SCS_1$, at least a part of the X multicarrier symbols being available for data transmission in each time interval,
> the resource pool being partitioned, in the frequency domain, in $L_1$ subchannels with respect to the first subcarrier spacing $SCS_1$,
> the resource pool comprising sets of $N_1 * L_1$ time-frequency units, each set spanning over $N_1$ time intervals and over $L_1$ subchannels with respect to the first subcarrier spacing $SCS_1$, each set being associated to a feedback occasion comprised, in the time domain, within P multicarrier symbols with respect to the first subcarrier spacing $SCS_1$ not available for data transmission with respect to the first subcarrier spacing $SCS_1$ such as:
>
> > the feedback occasion comprises time-frequency resources with respect to a second subcarrier spacing $SCS_2$, with $SCS_2 = k_1 * SCS_1$ and $k_1 > 1$, that are comprised, in the time domain, in a duration corresponding to in at least one and at most $R_{max}$ multicarrier symbols with respect to the second subcarrier spacing $SCS_2$, where $R_{max} = k_1 * P - 2$, where the time-frequency resources are available for a feedback transmission
> > the feedback occasion starts at least after the end of a first guard time $guard_1$ after a multicarrier symbol available for data transmission with respect to the first subcarrier spacing $SCS_1$, and the feedback occasion ends at least before a second guard time $guard_2$ before the start time of another multicarrier symbol available for data transmission with respect to the first subcarrier spacing $SCS_1$.

When it is considered that the guard intervals need to have a duration of one or multiple multicarrier symbols, the value of $R_{max}$ may be further decreased to $k_1 * P - 3$.

By multicarrier symbol available for data transmission, it is understood a multicarrier symbol (e.g. OFDM symbol, DFT-spread-OFDM symbol, etc) that may be used or at least partly used for data transmission (including information, control, or pilot signals) by at least one user equipment in the communication system. A multi-carrier symbol available for data transmission is a multicarrier symbol where data transmission may occur on one or several subcarriers. This does not imply that the symbol is systematically used for transmission, or that it is detected as not-occupied from sensing perspective by a user planning to transmit data.

By resource pool it is understood a pool or a group or a set of time-frequency resources where device-to-device communication may occur. When multiple subcarrier spacings and/or multiple waveforms/RATs coexist in a same resource pool (or, equivalently, in different superposed or overlapped resource pools), it may be assumed that there is time and/or frequency alignment between them. By time alignment it is understood that part of time intervals (or slots, subframes, symbols or other time units) of different subcarrier spacings and/or of different RATs start in the same time, or have aligned starting time boundaries. By frequency alignment it is understood that subcarriers from different subcarrier spacings and/or of different RATs are aligned on a common raster. For example, the subcarriers of a higher subcarrier spacing may be a subset of the subcarriers of lower subcarrier spacing. For example, part of the resource blocks of different subcarrier spacings and/or of different RATs start at the same frequency, or have aligned starting frequency boundaries.

Thus, different subcarrier spacings can be used between data and feedback transmission, which has various advantages such as improving the system's throughput, or allowing coexistence with other systems.

$SCS_1$, $SCS_2$ are subcarrier spacing values usually 15kHz or multiple of 15kHz. $L_1$ and $N_1$ are strictly positive integer values. We consider that $k_1$ is a positive integer value. P is a positive integer value equal to or superior to 1, typical values may be 1 when there is no feedback occasion included in the time interval, or may be 4 when a feedback occasion is included in the time interval(but values are not restricted to 1 and 4). $guard_1$ and $guard_2$ are positive values superior to null representing time durations where there is no transmission/reception with a specific transmission format, or slot format, or subcarrier spacing. They are time durations during which user equipments may switch between transmission and reception. These time durations may correspond to a multicarrier symbol duration, or to a fraction of a multicarrier symbol duration in a same or in a different subcarrier spacing, or may be fixed to an absolute time duration whose order of magnitude may be, for instance, a microsecond.

Although the current description refers to a resource pool containing multiple subcarrier spacings, in an equivalent manner it can be considered that there are multiple overlapping resource pools, each resource pool containing a single subcarrier spacing, or multiple resource pools multiplexed in the time domain, each resource pool containing a single subcarrier spacing. In this respect, it is considered that "a resource pool", "different overlapping resource pools", and "different resource pools multiplexed in the time domain", or "a group of resource pools" are equivalent manners of describing a time-frequency partitioning where several subcarrier spacings coexist.

Although the current description refers to communication in one resource pool, the communication system may simultaneously use several distinct resource pools with a same or with distinct configurations.

The current description mainly refers to communication with different carrier spacings. In these cases, the feedback occasion comprises time-frequency resources with respect to a second subcarrier spacing $SCS_2$, with $SCS_2 = k_1 * SCS_1$ and $k_1 > 1$, that are contained in at least one and at most $R_{max}$ multicarrier symbols with respect to the second subcarrier spacing $SCS_2$ that are available for a feedback transmission, where $R_{max} = k_1 * P - 2$. Although the current description refers to communication with different carrier spacings, there are many different possible implementations for obtaining multicarrier symbols with a same content. Let us take the example of a multicarrier symbol with $SCS_1$ wherein a given sequence occupies every $k_1$-th subcarrier, and wherein the $k_1 - 1$ between two occupied subcarriers are set to 0. Before cyclic prefix insertion, at the output of the OFDM modulator, this symbol with $SCS_1$ is equal (same contents and same time duration) to the repetition $k_1$ times of a OFDM symbol of subcarrier spacing $SCS_2 = k_1 * SCS_1$ and modulating the same given sequence. For example, if $k_1 = 2$, one PSFCH($SCS_1$) symbol with $SCS_1$ and wherein only every other subcarrier is occupied among the subcarriers allocated/intended for transmission (that is, one occupied subcarrier is followed in the frequency domain by one null subcarrier) is the same as [PSFCH($SCS_2$), PSFCH($SCS_1$)] or equivalently [AGC($SCS_2$) PSFCH($SCS_2$)] with $SCS_2 = 2 * SCS_1$. In the following descriptions, a multicarrier symbol of subcarrier spacing $SCS_2 = k_1 * SCS_1$ is equivalent to a portion of a multicarrier symbol with subcarrier spacing $SCS_1$ where only every $k_1$-th subcarrier is occupied. In other words, a multicarrier symbol of subcarrier spacing $SCS_2 = k_1 * SCS_1$ is equivalent to one of the $k_1$ equal portion of a multicarrier symbol with subcarrier spacing $SCS_1$ where only every $k_1$-th subcarrier is occupied. A time/frequency resource with respect to the second subcarrier spacing $SCS_2 = k_1 * SCS_1$ may be interpreted as a time/frequency resource of a duration and a frequency span equivalent to a transmission with $SCS_2$, but that can be occupied by a (portion) of a transmission with $SCS_1$. A time/frequency resource with respect to the second subcarrier spacing $SCS_2 = k_1 * SCS_1$ has a time duration $k_1$ times shorter and a frequency span $k_1$ times more important than a time/frequency resource with respect to the first subcarrier spacing $SCS_1$. A PRB with respect to $SCS_2$ (12 consecutive subcarriers with $SCS_2$) can be equivalently described as 12 consecutive groups $k_1$ of subcarriers with $SCS_1$.

From this perspective, although the current description refers to communication with different carrier spacings, it equally applies in an equivalent manner to the case where the feedback occasion comprises time-frequency resources with respect to a same subcarrier spacing $SCS_1$, wherein, for at least one and at most $R''_{max} = P - 1$ multicarrier symbols in the feedback occasion, only every $k_1$-th subcarrier is occupied, and $k_1 > 1$, Thus, the advantages of the method can be obtained and symbols with an equivalent content can be produced without major hardware changes with respect to the case when only $SCS_1$ is supported. As a supplementary feature, one or several cyclic prefixes of appropriate lengths can be supplementary introduced in the time domain either at the beginning of c, and/or in between each of the $k_1$ equal segments of said symbol. Thus, the total time duration (cyclic prefix included) of the original symbol can be preserved, and time alignment between different users can be ensured.

The proposed method enables coexistence in the same resource pool of several time interval formats with different subcarrier spacings with the purpose of avoiding the AGC issue caused by feedback transmissions. The method also enables coexistence within the same time interval of symbols with different subcarrier spacing with the purpose of achieving a convenient tradeoff between the performance of the data part and the performance of the feedback part of the transmission.

The proposed method associates, on the one hand, time-frequency units that can be used for data/control transmission/reception with subcarrier spacing $SCS_1$, and, on the other hand, time-frequency resources that can be used for feedback (e.g. HARQ ACK/NACK) transmission/reception with subcarrier spacing $SCS_2$.

Optionally, a given set of $N_1 * L_1$ time-frequency units is divided in a plurality of sub-sets, and at least a first sub-set of the plurality of sub-sets is associated to a set of time-frequency resources of the feedback occasion associated to the given set, while at least a second sub-set of the plurality of sub-sets is not associated to any time-frequency resource, with respect to the second subcarrier spacing $SCS_2$, of the feedback occasion associated to the given set.

Thus, transmission with HARQ enabled and transmission with HARQ disabled may coexist without wasting feedback resources.

Optionally, a given set of $N_1 * L_1$ time-frequency units is divided in a plurality of sub-sets, at least two subsets of the plurality of subsets being associated to corresponding sets of time-frequency resources of the feedback occasion associated to the given set, and each of the corresponding sets of time-frequency resources is contained in a different multicarrier symbol with respect to the subcarrier spacing $SCS_2$ and/or each of the corresponding sets of time-frequency resources is associated to a different group of orthogonal cyclic shift pairs. Thus, increasing the subcarrier spacing for the feedback transmission is possible without decreasing the multiplexing capacity of PSFCH. Optionally, at least one time-frequency unit from a given set of $N_1 * L_1$ time-frequency

units is associated with time-frequency resources comprised in the frequency domain within at most $floor(N_1 * L_1/k_1)$, or within at most $ceil(N_1 * L_1/k_1)$, different physical resource blocks of the feedback occasion associated to the given set, a physical resource block being formed of twelve consecutive subcarriers with respect to the second subcarrier spacing $SCS_2$. In a variant, at least one time-frequency unit from a given set of $N_1 * L_1$ time-frequency units is associated with time-frequency resources comprised in the frequency domain within strictly less than $(N_1 * L_1)$ different physical resource blocks of the feedback occasion associated to the given set, a physical resource block being formed of twelve consecutive subcarriers with respect to the second subcarrier spacing $SCS_2$.

At least one of the subsets is understood to contain at least one time-frequency unit. In a variant, all of the subsets are understood to contain at least one time-frequency unit.

In an equivalent manner, at least one time-frequency unit from a given set of $N_1 * L_1$ time-frequency units is associated with time-frequency resources in feedback occasion associated to the given set wherein, in the frequency domain, only every $k_1$ th subcarrier is occupied in at least one multicarrier symbol with the first subcarrier spacing $SCS_1$ in the feedback occasion.

Thus, feedback with a higher subcarrier spacing is possible without modifying the mapping rules with respect to the case where a same subcarrier spacing was used between data and feedback transmission,

Optionally, each time interval comprising X multicarrier symbols with respect to a first subcarrier spacing $SCS_1$ is a time interval of a first type,
the resource pool being partitioned, in the time domain, in time intervals of a second type, each time interval of the second type comprising Y multicarrier symbols with respect to a third subcarrier spacing $SCS_0$, with $SCS_1 = k_0 * SCS_0$ and $k_0 \geq 1$, among the Y multicarrier symbols at least a part being available for data transmission in each time interval of the second type, and $P_0 \geq 1$ multicarrier symbols not being available for transmission in each time interval of the second type and at least one of the feedback occasions is comprised, in the time domain, within the $P_0$ multicarrier symbols. It is considered that $SCS_0$ is a subcarrier spacing value usually 15kHz or multiple of 15kHz, and that $Y, k_0$ and $P_0$ are integer values. X may or may not be equal to Y.

Thus, the proposed method further enables coexistence of such mixed time intervals with a second type of time intervals with a smaller subcarrier spacing $SCS_0$ without AGC issues.

Optionally, $N_1$ is a multiple of $k_0$ and the time-frequency resources of any feedback occasion are comprised, in the time domain, in a duration corresponding to at least 1 and at most $R'_{max} = k_1 * k_0 * P_0 - 2$ multicarrier symbols with respect to the second subcarrier spacing $SCS_2 = k_1 * SCS_1$. The duration corresponding to at least 1 and at most $R'_{max} = k_1 * k_0 * P_0 - 2$ multicarrier symbols

with respect to the second subcarrier spacing $SCS_2 = k_1 * SCS_1$ may also be expressed, equivalently, as a duration corresponding to at least $1/k_1$ and at most $k_0 * P_0 - 1$ multicarrier symbols with respect to $SCS_1$.

Optionally, $N_1$ has a different value among the sets of $N_1 * L_1$ time-frequency units. As a reminder, each set of $N_1 * L_1$ time-frequency units comprises $N_1$ time intervals, which each comprise a number of X multicarrier symbols with respect to the first subcarrier spacing $SCS_1$. Although usually the value X is fixed for a resource pool (e.g. 7, or 13, or 14, etc), the current description also refers to the case where the value X may vary from one time interval to another, or from one set of time intervals to another..

Thus, the proposed method further enables a set of configurations enabling coexistence of such mixed time intervals with a second type of time intervals with a smaller subcarrier spacing $SCS_0$.

It is further proposed a device-to-device communication system comprising a user equipment configured for transmitting and/or receiving at least one multicarrier radio signal using a resource pool:

the resource pool being partitioned, in the time domain, in time intervals, each time interval comprising X multicarrier symbols with respect to a first subcarrier spacing $SCS_1$, at least a part of the X multicarrier symbols being available for data transmission in each time interval,

the resource pool being partitioned, in the frequency domain, in $L_1$ subchannels with respect to the first subcarrier spacing $SCS_1$,

the resource pool comprising sets of $N_1 * L_1$ time-frequency units, each set spanning over $N_1$ time intervals and over $L_1$ subchannels with respect to the first subcarrier spacing $SCS_1$, each set being associated to a feedback occasion comprised, in the time domain, within P multicarrier symbols with respect to the first subcarrier spacing $SCS_1$ not available for data transmission with respect to the first subcarrier spacing $SCS_1$ such as:

the feedback occasion comprises time-frequency resources with respect to a second subcarrier spacing $SCS_2$, with $SCS_2 = k_1 * SCS_1$ and $k_1 > 1$, that are comprised, in the time domain, in a duration corresponding to in at least one and at most $R_{max}$ multicarrier symbols with respect to the second subcarrier spacing $SCS_2$, where $R_{max} = k_1 * P - 2$, where the time-frequency resources are available for a feedback transmission,

the feedback occasion starts at least after the end of a first guard time $guard_1$ after a multicarrier symbol available for data transmission with respect to the first subcarrier spacing $SCS_1$, and the feedback occasion ends at least before a second guard time $guard_2$ before the start time of another multicarrier symbol available for data transmission with respect to the first subcarrier spacing $SCS_1$.

It is further proposed a computer program comprising instructions which, when the program is executed by a processor, cause the processor to carry out the above method.

Many user equipment (UE) behaviors for performing resource allocation, transmission and reception are enabled when at least part of the exchanges are performed according to the above method. A non-limitative list of such possible UE behaviors is then provided in the following paragraphs. When a UE behavior includes selecting a time-frequency unit or resource for a transmission, it is implied that the UE may further perform the transmission using the selected time-frequency unit or resource.

It is further proposed a user equipment of the device-to-device communication system of claim 8, the user equipment selecting, from a set of $N_1 * L_1$ time-frequency units with respect to the first subcarrier spacing $SCS_1$, a group of time-frequency units for a data transmission, the time-frequency units in the group being in subchannels with index from $L_{start}$ to $L_{end}$, with $L_{start} \leq L_{end}$, and in time intervals from $T_{start}$ to $T_{end}$, with $T_{start} \leq T_{end}$, wherein

if the user equipment is configured with HARQ enabled for the data transmission, at least the time-frequency unit in subchannel $L_{start}$ and in time unit $T_{start}$ is associated to a set of time-frequency resources of the feedback occasion associated to the set, and if the user equipment is configured with HARQ disabled for the data transmission, at least the time-frequency unit in subchannel $L_{start}$ and in time unit $T_{start}$ is not associated to any time-frequency resource of the feedback occasion associated to the given set.

It is further proposed a user equipment of the device-to-device communication system of claim 8, the user equipment selecting, from a set of $N_1 * L_1$ time-frequency units with respect to the first subcarrier spacing $SCS_1$, a group of time-frequency units for a data transmission, the time-frequency units in the group being in subchannels with index from $L_{start}$ to $L_{end}$, with $L_{start} \leq L_{end}$, and in time intervals from $T_{start}$ to $T_{end}$, with $T_{start} \leq T_{end}$, wherein

if the user equipment is configured with HARQ enabled for the data transmission, all the time-frequency units in the group are associated to sets of time-frequency resources of the feedback occasion associated to the set, and if the user equipment is configured with HARQ disabled for the data transmission, the time-frequency units in the group do not have any associated to sets of time-frequency resources in the feedback occasion associated to the set.

Thus, a user equipment may select appropriate resources for its transmissions with HARQ enabled and/or for its transmission with HARQ disabled without wasting data and feedback resources.

It is further proposed a user equipment of the above device-to-device communication system, wherein the feedback occasion further comprises a first type of time-frequency resources with respect to the first subcarrier spacing $SCS_1$ that may be used for a first type of feedback transmission and that are contained in first multicarrier symbols in the time domain,

wherein the time-frequency resources with respect to the second subcarrier spacing $SCS_2$ are a second type of time-frequency resources that may be used for a second type of feedback transmission and are contained in second multicarrier symbols in the time domain,
wherein the second multicarrier symbols do not overlap, in the time domain, with any of the first multicarrier symbols, and
wherein the user equipment performs a selection step between the first and the second type of feedback transmission, the selection step being based on a criterion related to a detected or intended transmission. The criterion may relates to:

a) a detection by the user equipment of a presence of a transmission overlapping with at least one of the first type of time-frequency resources and/or
b) an intention of performing by the user equipment a data transmission on at least one of the first type of time-frequency resources.

As already mentioned, although the current description refers to communication with different carrier spacings, it equally applies in an equivalent manner to the case where the first type of time-frequency resources, with respect to the first subcarrier spacing $SCS_1$, is contained in first multicarrier symbols in the time domain, while the second type of time-frequency resources, with respect to a same subcarrier spacing $SCS_1$, occupy only every $k_1$-th subcarrier, for at least one and at most $R''_{max} = P - 1$ multicarrier symbols in the feedback occasion, and $k_1 > 1$. The occupied subcarriers for a given transmission are understood to be contained among a group of subcarriers of $SCS_1$ allocated/intended for the given transmission (e.g. within a set of time-frequency resources for feedback transmission). It is not implied that the subcarrier group formed by every $k_1$-th subcarrier in all subchannels/ in the whole multicarrier symbol is simultaneously occupied by a same transmission (said group is available for transmission from the system perspective, not from a user perspective),

Thus, classic slot formats (same subcarrier spacing between data and feedback) and new slot formats (different subcarrier spacing between data and feedback) may coexist in the same resource pool, enabling for example coexistence with legacy users (unable of understanding the new format), or enabling for example having a higher number of feedback resources (increasing the PSFCH multiplexing capability).

It is further proposed a user equipment configured to receive a feedback transmission from the above user equipment, independently of whether the feedback transmission is of the first or of the second type, and optionally further configured to detect an indication, from the type of the received feedback transmission, and to select, from a set of $N_1 * L_1$ time-frequency units with respect to the first subcarrier spacing $SCS_1$, a group of time-frequency units for a further data transmission based on the detected indication.

## Brief Description of Drawings

Other features, details and advantages will be shown in the following detailed description and on the figures, on which:

### Fig. 1

[Fig. 1] illustrates different possible time domain configurations suitable for LTE and for NR as known from prior art. [Fig. 1] may equivalently be interpreted to illustrate different possible configurations of time-frequency units suitable for LTE and for NR. In yet another equivalent interpretation, [Fig. 1] illustrates different slot configurations for NR and LTE, seen over one or several subchannels.

### Fig. 2

[Fig. 2] illustrates a situation of coexistence between different RATs as known from prior art, where a transmission using one of the RATs (Radio Access Technology) may affect a performance of a transmission using another one of the RATs.

### Fig. 3

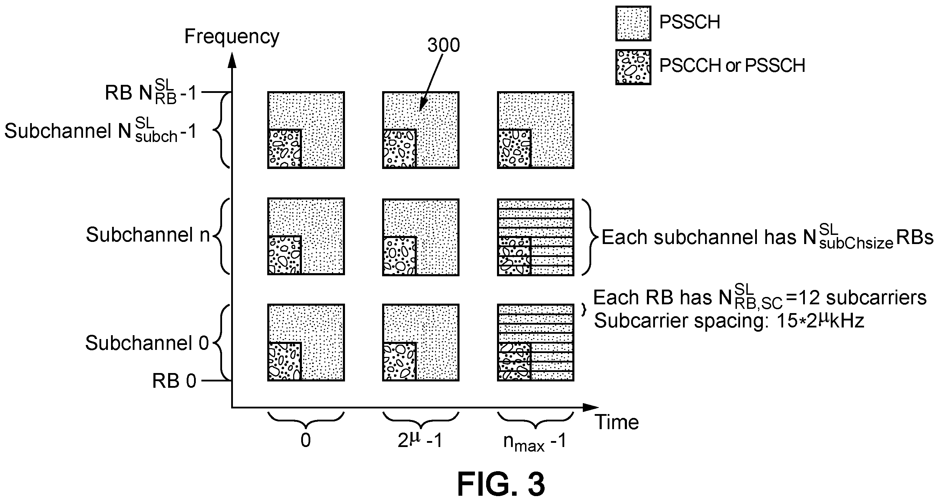

[Fig. 3] illustrates a NR sidelink resource pool as known from prior art.

### Fig. 4A, 4B, Fig. 5A, 5B and 6

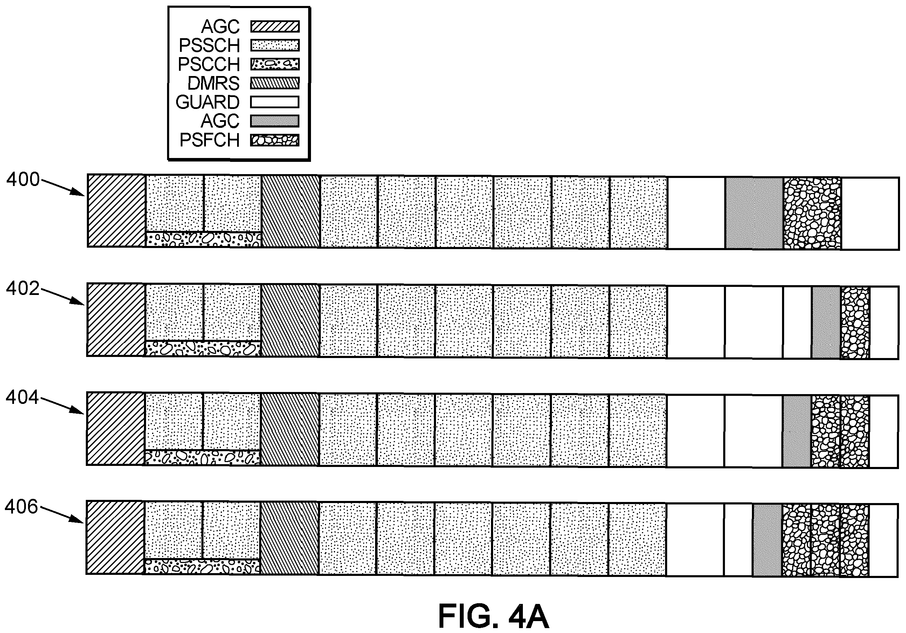

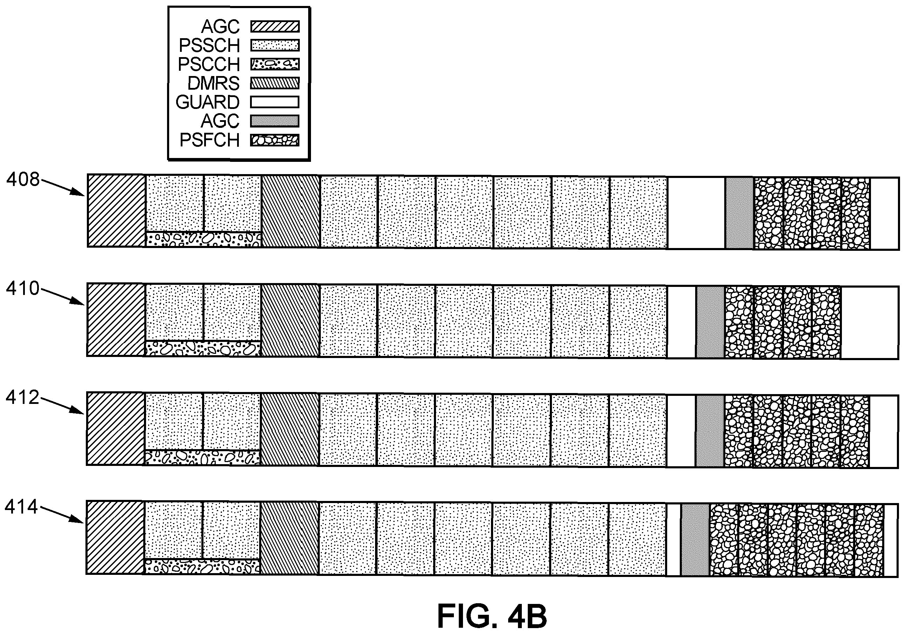

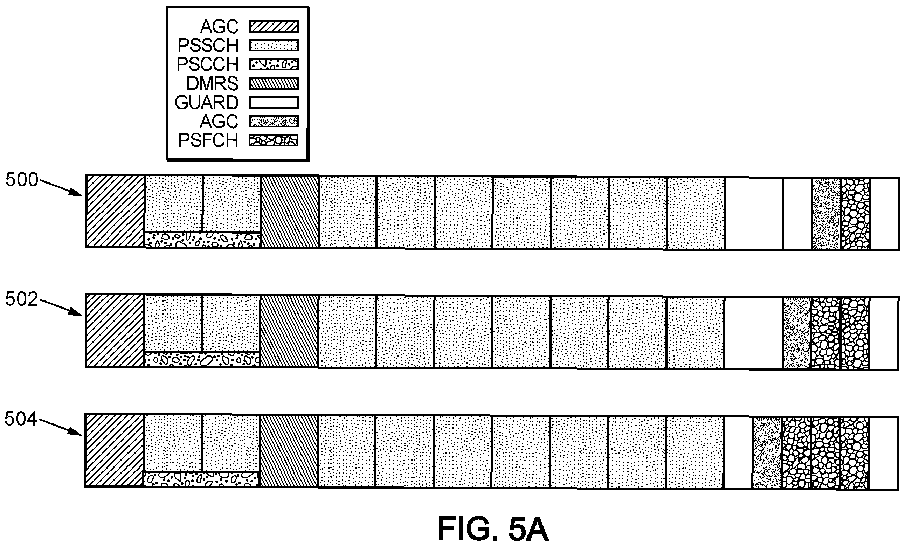

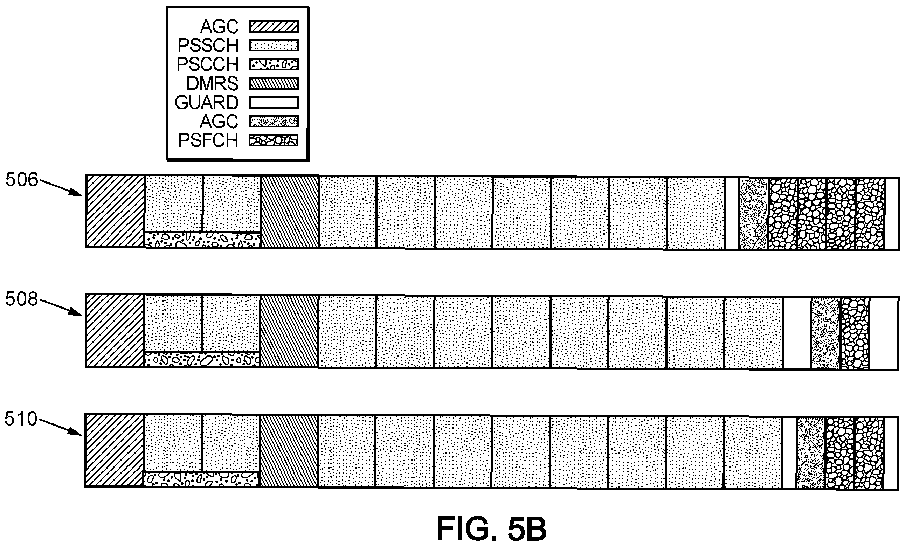

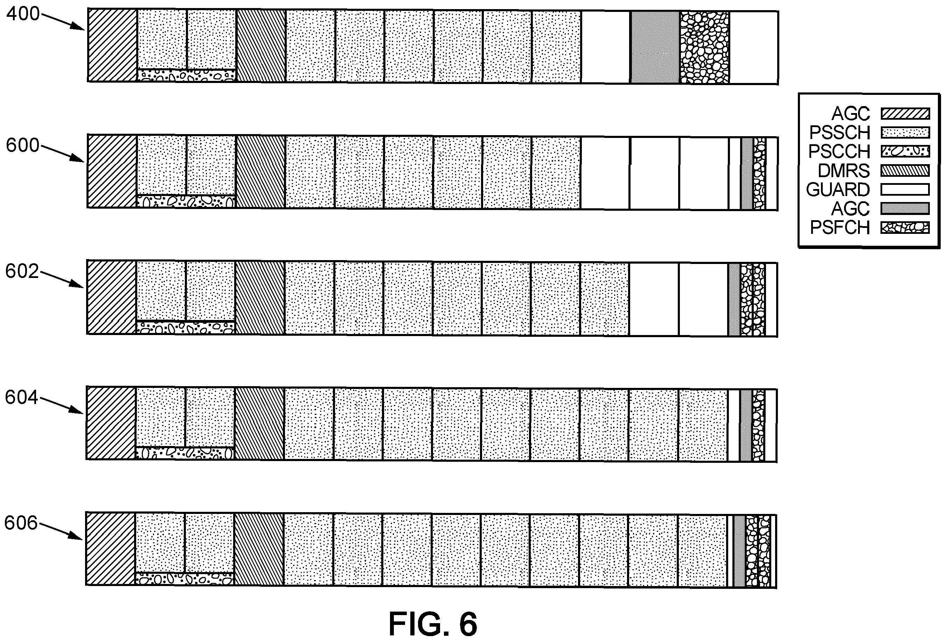

[Fig. 4A], [Fig. 4B], [Fig. 5A], [Fig. 5B] and [Fig. 6] illustrate different possible time domain configurations according to examples of the invention where $k_1 = 2$ and different P values.

### Fig. 7

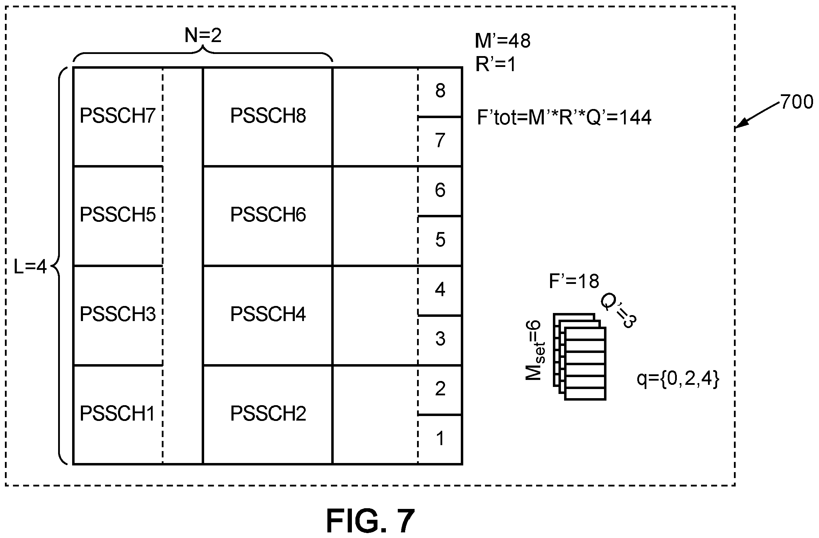

[Fig. 7] illustrates an association of time-frequency units for data transmission with time-frequency-code resources for feedback transmissions, as known from prior art.

### Fig. 8, 9, 10A, 10B, 11A, 11B, 12A, 12B and 13

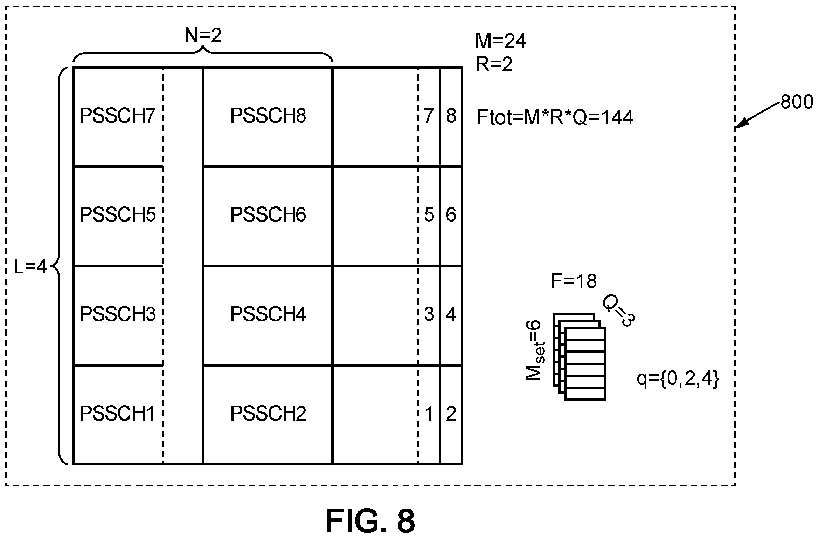

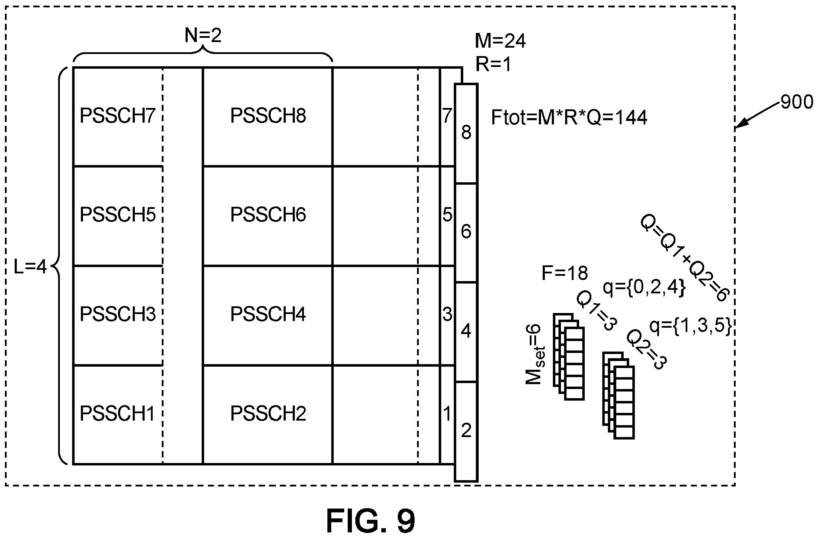

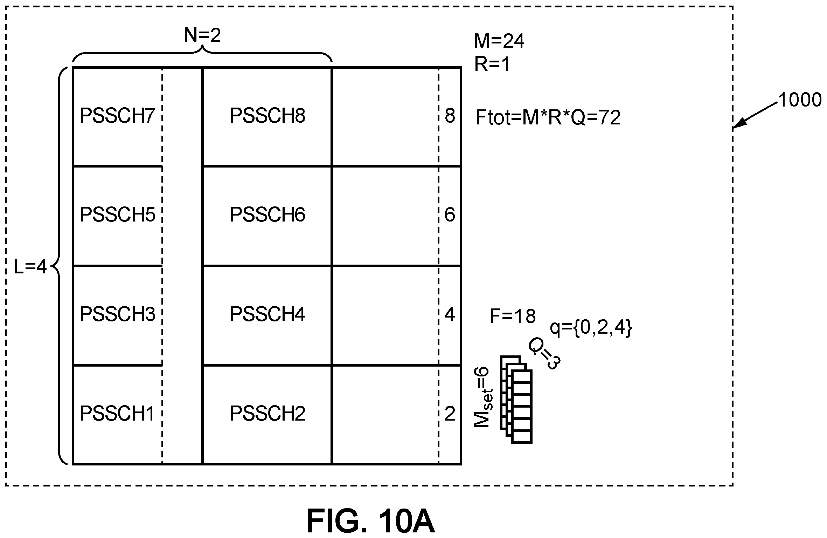

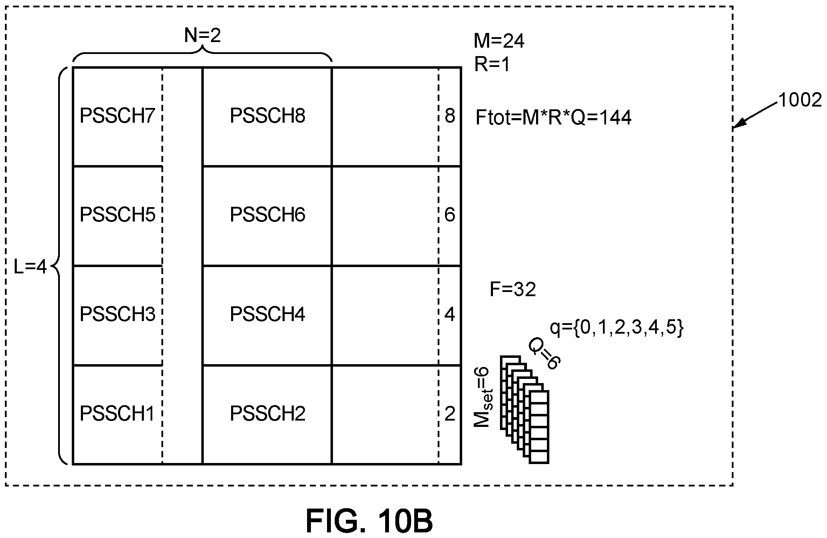

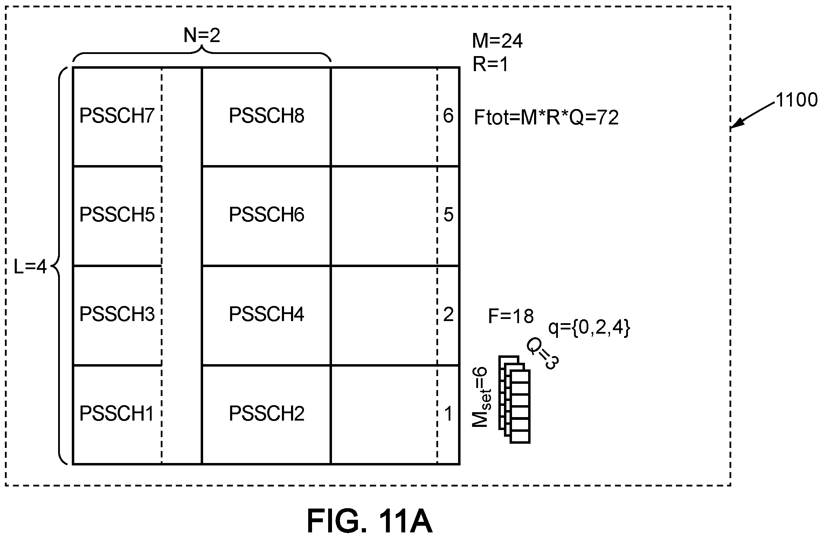

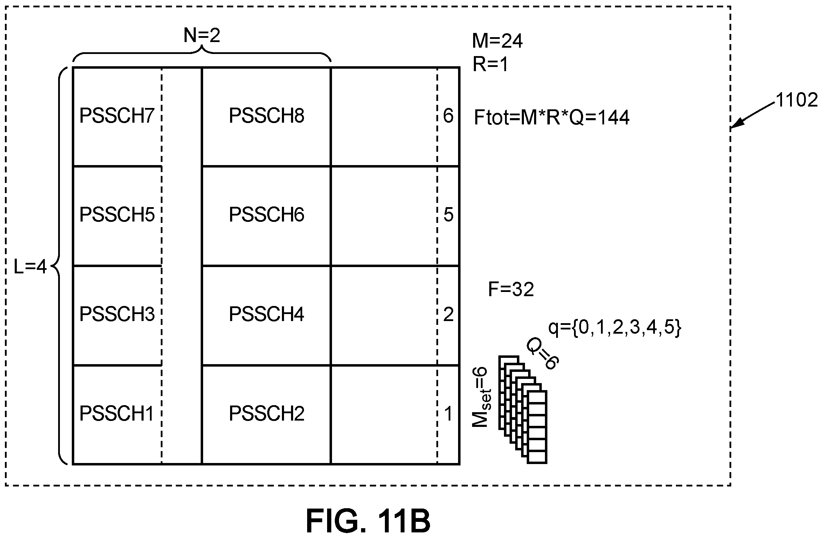

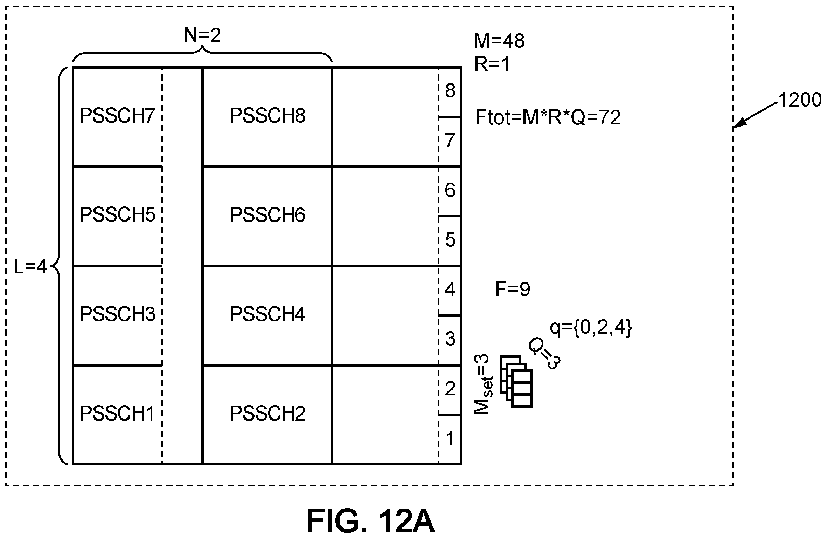

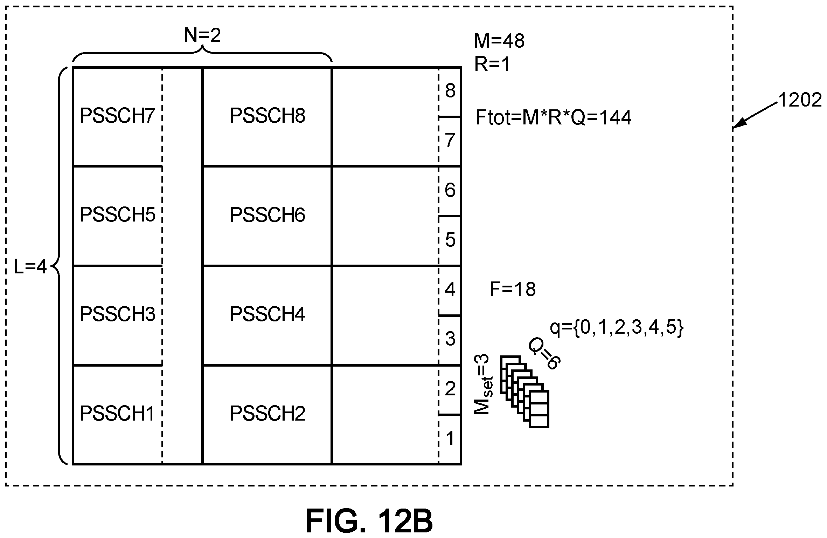

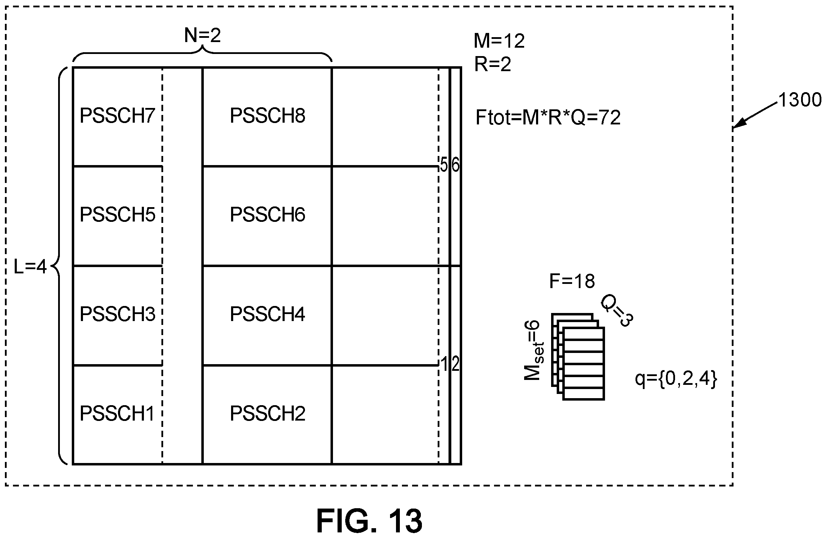

[Fig. 8], [Fig. 9], [Fig. 10A], [Fig. 10B], [Fig. 11A], [Fig. 11B], [Fig. 12A], [Fig. 12B] and [Fig. 13] illustrate different possible associations of time-frequency units for data transmission with time-frequency-code resources for feedback transmissions, according to examples of the invention.

### Fig. 14 and Fig. 15

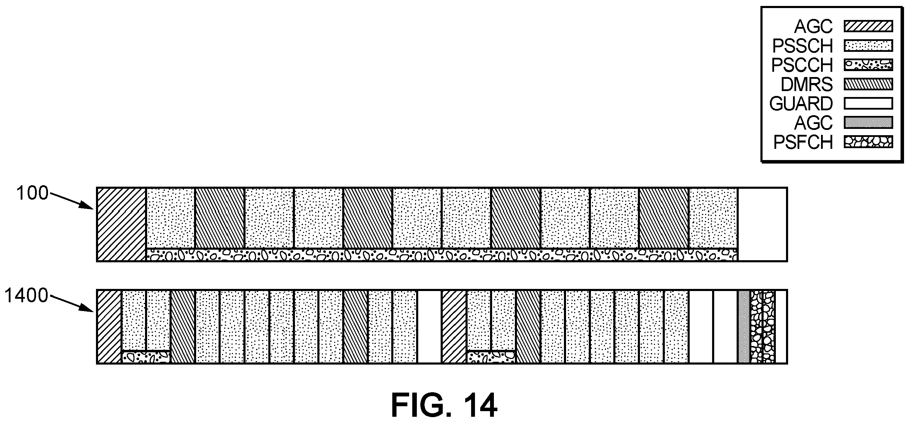

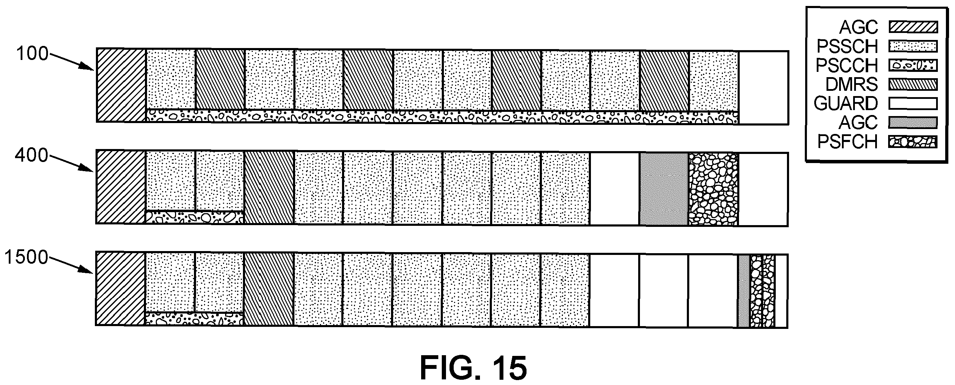

[Fig. 14] and [Fig. 15] illustrate situations of coexistence between different types of transmission, where a type of data transmission is configured not to affect a performance of another type of transmission, according to examples of the invention.

## Description of Embodiments

State of the art PSSCH/PSCCH to PSFCH resource mapping

It is referred to Figure 3 which depicts schematically the NR sidelink resource grid, or resource pool, as known from the state-of-the-art. The smallest unit in a sidelink (SL) communication is the RE (resource element), composed by a subcarrier k and an OFDM symbol $l$, where $N_{RB,SC}^{SL} = 12$ subcarriers (SC) form a PRB (physical resource block) (300), or more simply RB, with a subcarrier spacing equal to 15 * $2^\mu$ kHz, where $\mu \in \{0,1,2,3,4\}$ are examples of part of the 5G-NR existing numerology, and usually 14 OFDM symbols correspond to a time interval. In the time domain, a set of $2^\mu$ time intervals corresponds to 1 ms. In the frequency domain, we have L subchannels with $N_{subChsize}^{SL}$ PRBs each, in a total of $N_{RB,SC}^{SL} = L * N_{subChsize}^{SL}$ PRBs available for sidelink transmissions with a given subcarrier spacing.

In the current specifications (NR Rel.16, Rel.17), PSSCH and the associated PSFCH occur in the same resource pool and have a same numerology. The PSFCH multicarrier symbol that can be used for the HARQ feedback for a given PSSCH transmission corresponds to the PSFCH symbol in the first time interval with PSFCH after a (pre-)configured number of K time intervals after the PSSCH. PSFCH occasions occur every N PSSCH time intervals. Let us consider that the last symbol of a PSSCH transmission is in time interval n. The HARQ feedback for this transmission is expected in time interval n + a, where a is the smallest integer equal or higher than K such that time interval n + a contains PSFCH. There is a single PSFCH OFDM symbol of index $l_0$ in time interval n + a. For time intervals with 14 symbols (l = 0 ...13) as in Figure 1, $l_0$ = 12. The AGC symbol in position l = 11, although having the same contents as PSFCH in OFDM symbol $l_0$ = 12, has the purpose of tuning the high-power amplifier at the receiver and is not assumed as being decodable/decoded by the receiver.

Hence, there is a group of $L * N$ PSSCH time-frequency units being associated to one single PSFCH OFDM symbol having index $l_0$ in time interval $n + a$, where $n$ is the last time interval in the group of $L * N$ PSSCH time-frequency units and $a$ is the smallest integer equal or higher than $K$ such that time interval $n + a$ contains a PSFCH occasion. PSFCH symbol $l_0$ contains M PRBs in the frequency domain available for PSFCH transmission. By (pre)-configuration, it is ensured that M is a multiple of $L * N$, that means that each PSFCH symbol $l_0$ contains $L * N$ sets of $M_{set} = M/(L * N)$ PRBs each. M can be at most

$$M_{max} = L * N_{subChsize}^{SL}$$

PRBs.

Each time-frequency unit in the group is associated to a specific PSFCH set of PRBs in symbol $l_0$. More precisely, symbol $l_0$ contains $L * N$ PSFCH resources indexed from m = 0 ... $L * N$ in the frequency domain, each such resource being composed of $M_{set}$ PRBs. One PSFCH transmission occupies one PRB of index m = 0 ... $M_{set}$ - 1. Up to $Q$ PSFCH transmissions may be multiplexed (in the code domain) within the same time-frequency resource x of set ($l_0$,m). $Q$ may be 1, 2, 3 or 6 pairs of cyclic codes (each pair can be used to discriminate ACK from NACK).

There is thus a logical association between a PSSCH time-frequency unit ($L_j$,$N_j$) from a group of $L * N$ PSSCH time-frequency units and a set of $M_{set} * Q$ time/frequency/code PSFCH resources, such as

- all $M_{set} * Q$ time/frequency/code PSFCH resources have a same time $l_0$ depending on the group of $L * N$ PSSCH time-frequency units
- the $M_{set} * Q$ PSFCH resources are in the $N_j$-th group of $M_{set}$ PRBs of subchannel $L_j$ of PSFCH symbol $l_0$

Hence, in the state of the art, the logical association mentioned above specifies that:

- PSSCH and PSFCH have the same SCS, with one PSFCH transmission occupying one PRB,
- groups of $L * N$ PSSCH time-frequency units occupying the totality of the $L$ subchannels in the resource pool over $N$ consecutive time time interval durations are associated to a single PSFCH OFDM symbol of index $l_0$ and a given set of $Q$ pairs of cyclic shifts,
- each PSSCH time-frequency unit in the group is associated to a set of $M_{set}$ PRBs in symbol $l_0$, while different PSSCH time-frequency units in a given subchannel have different associated sets in the same subchannel (but they may sometimes not be effectively used if the effective transmission starts in a different subchannel), and
- for each PSSCH time-frequency units, there are $M_{set} * Q$ associated PSFCH time/frequency/code resources.

In summary, groups of $L * N$ PSSCH time-frequency units occupying the totality of the $L$ subchannels in the resource pool over $N$ consecutive time time interval durations are associated to $L * N * M_{set} * Q$ PSFCH time/frequency/code resources. Each PSSCH time-frequency units of index m = 1 ... $L * N$ in a group is associated to $M_{set} * Q$ PSFCH time/frequency/code resources such that

- all PSSCH time-frequency unit are associated to a same time index $l_0$,
- each PSSCH time-frequency unit is associated to a set of $M_{set}$ different PRBs, different PSSCH time-frequency units being associated to different sets (non-overlapping in the frequency domain), and
- each PSSCH time-frequency units is associated to a same group of $Q$ cyclic shifts.

When considering a scenario of an effective PSSCH transmission by a TX UE, the transmission starting in a given time-frequency unit with a given start subchannel index $L_{start}$ and spanning $L'$ subchannels, there are F available PSFCHs that can be used by up to F RX UEs. The exact PSFCH resource used for PSFCH transmission is selected by the RX UE (receiving PSSCH and transmitting PSFCH),

- either among the $F = M_{set} * Q$ PSFCH resources associated with the PSSCH time-frequency unit in the starting subchannel of the transmission, or
- or among the $F = L' * M_{set} * Q$ PSFCH resources associated with the PSSCH time-frequency units in the $L'$ subchannels occupied by the transmission.

The exact resource depends on the *layer*1 ID of the TX UE, the value F, and transmission type or an identifier of the RX UE (exact formula to select the index i of the PSFCH among the F possible PSFCH resources is $i = (TID + RID)mod(F)$, where *TID* is the *layer*1 ID of the TX UE and *RID* is an identifier related to the RX UE).

Proposed PSSCH/PSCCH to PSFCH association

When PSFCH and PSSCH use different subcarrier spacing, the logical association between PSSCH with subcarrier spacing $SCS_1$ and PSFCH with subcarrier spacing $SCS_2 = k_1 * SCS_1$ need to be modified. Currently, a PSFCH occasion having the same $SCS_1$ as PSSCH occupies 2 ODFM symbols for effective transmission across all subchannels. 2 OFDM symbols are used as guard. In the PSSCH time interval (composed of $L$ PSSCH time-frequency units) containing a PSFCH occasion, the 4 symbols (guard+AGC+PSFCH+guard) are the 4 last OFDM symbols in the PSSCH time interval of $SCS_1$.

By PSFCH occasion or feedback occasion it is understood a group of successive OFDM symbols that can be used for multiplexing ACK/NACK feedback from different user equipments, or in other words for PSFCH transmission. The AGC symbol is understood to be part of the PSFCH occasion. The guard symbol(s) before and/or after the effective transmission of AGC and PSFCH may or may not be understood to be part of the PSFCH occasion (the guard symbol is empty, not used for transmission by any UE). In the following description, we consider that the guard symbols are not a part of the PSFCH occasion, and that the AGC is part of the PSFCH occasion but is not a PSFCH symbol and is not considered to contain any time-frequency resources for feedback, and is thus not counted here as a multicarrier symbol for feedback transmission (different symbol indexing by including/excluding guards and/or AGC from the current definition of a PSFCH occasion are considered as equivalent and not described here). A PSFCH occasion contains all possible PSFCH resources associated with a group of $N_1 * L_1$ PSSCH time-frequency units spanning over $L_1$ consecutive subchannels in the frequency domain and $N_1$ consecutive time interval durations in the time domain.

When the SCS of PSFCH transmission is modified from $SCS_1$ to $SCS_2 = k_1 * SCS_1$, the time duration of the OFDM symbol is divided by $k_1$ while the frequency span of the OFDM symbol is multiplied by $k_1$. A new logical mapping of the PSSCH resource to the PSFCH resource is needed, while keeping in mind the multiplexing capacity F of PSFCH. A PSFCH transmission occupies one PRB in $SCS_2$ ($12 * SCS_2$ kHz).

It is therefore proposed a communication method implemented in a device-to-device communication system for a transmission and/or a reception of multicarrier radio signals, the communication method using a resource pool for said transmission and/or reception, the resource pool being partitioned, in the time domain, in time intervals, each time interval comprising $X$ multicarrier symbols with respect to a first subcarrier spacing $SCS_1$, at least a part of the $X$ multicarrier symbols being available for data transmission in each time interval, the resource pool being partitioned, in the frequency domain, in $L_1$ subchannels with respect to the first subcarrier spacing $SCS_1$, the resource pool comprising sets of $N_1 * L_1$ time-frequency units, each set spanning over $N_1$ time intervals and over $L_1$ subchannels with respect to the first subcarrier spacing $SCS_1$, each set being associated to a feedback occasion comprised, in the time domain, within $P$ multicarrier symbols with respect to the first subcarrier spacing $SCS_1$ not available for data transmission with respect to the first subcarrier spacing $SCS_1$ such as:

the feedback occasion comprises time-frequency resources with respect to a second subcarrier spacing $SCS_2$, with $SCS_2 = k_1 * SCS_1$ and $k_1 > 1$, that are contained in at least one and at most $R_{max}$ multicarrier symbols with respect to the second subcarrier spacing $SCS_2$ that are available for a feedback transmission, where $R_{max} = k_1 * P - 2$,
the feedback occasion starts at least after the end of a first guard time $guard_1$ after a multicarrier symbol available for data transmission with respect to the first subcarrier spacing $SCS_1$, and the feedback occasion ends at least before a second guard time $guard_2$ before the start time of another multicarrier symbol available for data transmission with respect to the first subcarrier spacing $SCS_1$.

In the above communication method, the following terms and expressions are further detailed for the sake of clarity:

- the multicarrier symbols, or simply "symbols", may for instance be OFDM symbols, as in the current specifications of NR V2X, or DFT-spread-OFDM symbols, as in the current specifications of LTE V2X, or other types of multicarrier symbols,
- the value of $N_1$ may be the same for all sets of $N_1 * L_1$ time-frequency units, or the value of $N_1$ may differ from one set of $N_1 * L_1$ time-frequency units to another,
- the value of $k_1$ may be related to the value of $N_1$ so that feedback occasions that are associated to different sets of $N_1 * L_1$ time-frequency units may have time-frequency resources that are conveniently aligned,
- data transmission may include for instance any message carried by PSSCH and PSCCH channels, including associated reference signals and/or associated AGC,

  - a feedback occasion may not be, itself, included in the set of time-frequency units it is associated with, but may for instance be part of a subsequent set of time-frequency units,
  - feedback transmission indicates a feedback to an earlier data transmission, a feedback transmission may include for instance HARQ feedback using PSFCH, and may further include an AGC required to send the feedback.

The above communication method equally applies in an equivalent manner to the case where the feedback occasion comprises time-frequency resources with respect to a same subcarrier spacing $SCS_1$, wherein, for at least one and at most $R''_{max} = P - 1$ multicarrier symbols in the feedback occasion, only every $k_1$-th subcarrier is occupied, and $k_1 > 1$. In particular, $k_1$ may be equal to 2, 4 or more.

In the current description we introduce examples of resource pools that may simultaneously contain different subcarrier spacings. Various possible time domain configurations according to examples of the above communication method are now presented. The following covers possible implementations of the proposed communication method in a NR V2X communication network following the current specifications. For this reason, it may be referred, in the following, to "multicarrier symbols", "OFDM symbols", or simply "symbols". These terms are to be interpreted as interchangeable in the context of the proposed communication method, which may be alternatively applied to other communication networks. Any mention of a "symbol", or of an "OFDM symbol" in the following is then to be interpreted as referring to any suitable type of "multicarrier symbol" for a given communication network.

Time interval formats with a SCS ratio of $k_1 = 2$ or $k_1 = 4$

Let us consider a first example where the $SCS_2$ of the PSFCH transmission is twice the $SCS_1$ of the associated PSSCH transmission ($k_1 = 2$). In the following, the expression "PSSCH transmission" may be generalized to refer to one or more time-frequency units, with respect to the first subcarrier spacing $SCS_1$, that may be occupied by a data transmission according to the proposed communication method, and the expression "PSFCH transmission" may be generalized to refer to one or more time-frequency resources or time-frequency-code resources, with respect to the second subcarrier spacing $SCS_2$, that may be occupied by a feedback transmission according to the proposed communication method. Expressions such as "PSSCH symbol" or "PSSCH time interval" relate to PSSCH transmission while expressions such as "PSFCH symbol", "PSFCH time interval" or "PSFCH occasion" relate to PSFCH transmission.

Figures 4A and 4B show the possible time domain configurations (400-414) (frequency domain is ignored) where the time interval is partitioned between a first part where PSSCH transmission can occur with $SCS_1$, and a second part where PSFCH transmission can occur with $SCS_2$. A first time domain configuration (400) refers to a time-domain configuration that is known from the prior art (same SCS), while the other time domain configurations (402-414) depict examples of the invention where $SCS_2 = k_1 * SCS_1$. $P$ is chosen equal to 4, which has the advantage of having the same PSSCH time interval format as in the current specifications. The guard symbols are not associated with a specific subcarrier spacing, but a minimum time duration needs to be observed in order to allow switching between transmission and reception: feedback occasions can start at least after a first guard time $guard_1$ after the end of the last PSSCH symbol that can be used for PSSCH transmission in the PSSCH time interval, each feedback occasion ending at least before a second guard time $guard_2$ before the end of the PSSCH time interval. As an example, in one of the depicted proposed time domain configurations (402), $guard_1$ corresponds to the total duration of three consecutive guard symbols (two with $SCS_1$ and one with $SCS_2$) and $guard_2$ corresponds to the duration of a single guard symbol with $SCS_2$. Up to $R_{max} = P * k_1 - 2 = 6$ PSFCH OFDM symbols may exist in the PSFCH occasion.

Figures 5A and 5B show the possible time domain configurations (500-510) (frequency domain is ignored) where the time interval is partitioned between a first part where PSSCH transmission can occur with $SCS_1$, and a second part where PSFCH transmission can occur with $SCS_2 = k_1 * SCS_1$. $P = 3$ (500, 502, 504, 506) and $P = 2$ (508, 510), which has the advantage of increasing the PSSCH throughput by increasing the number of multicarrier symbols available for PSSCH in the time interval. The guard symbols are not associated with a specific subcarrier spacing, but a minimum (nonnull) time duration needs to be observed to allow switching between transmission and reception: feedback occasions can start at least after a first guard time $guard_1$ after the end of the last PSSCH multicarrier symbol that can be used for PSSCH transmission in the time interval, each feedback occasion ending at least before a second guard time $guard_2$ before the end of the time interval. The minimum guard can be shorter than e.g. the duration of an OFDM symbol in a given SCS. Up to $P * k_1 - 2 = 4$ PSFCH OFDM symbols may exist in the PSFCH occasion when $P = 3$. With $P = 4$, up to only 2 PSFCH OFDM symbols may be used, but number of symbols available for PSSCH in the time interval is further increased.

When more than $k_1$ PSFCH multicarrier symbols are available, the extra symbols may be used to increase the reliability of the PSFCH transmission (e.g. through repetitions, through decreasing the number of cyclic shift pairs simultaneously used in a $M_{set}$), or to increase the multiplexing capacity of the PSFCH (more PSFCH resources available).

Figure 6 shows a subset of possible time domain configurations (400, 600-606) with $k_1 = 4$. A reference time domain configuration (400) is depicted and refers to the current "state of the art" configuration (same SCS), while all other depicted time domain configurations (600-606) depict examples suitable for the proposed case where $SCS_2 = 4 * SCS_1$, each of these examples allowing up to $R_{max} = 14$ different PSFCH OFDM multicarrier symbols to exist.

All the above embodiments correspond to a D2D multicarrier system with a resource pool having time intervals for PSSCH transmission with subcarrier spacing $SCS_1$ spanning $L_1$ subchannels, and having feedback occasions occurring every $N_1$ PSSCH time intervals, and where $P \leq 4$ OFDM symbols with $SCS_1$ at the end of the PSSCH time intervals having feedback occasions are not available for PSSCH transmission with $SCS_1$, such that feedback occasions contain PSFCH time-frequency resources with $SCS_2 = k_1 * SCS_1$, $k_1 > 1$, each feedback occasion containing at least one and at most $R_{max} = P * k_1 - 2$ PSFCH OFDM symbols with $SCS_2$, each feedback occasion starting at least after a first guard time $guard_1$ after the end of the last PSSCH symbol that can be used for PSSCH transmission in the time interval, each feedback occasion ending at least before a second guard time $guard_2$ before the end of the time interval.

Thus, the time interval formats proposed in Figures 4A, 4B, 5A and 5B (402, 404, 406, 408, 410, 412, 414, 500, 502, 504, 506, 508, 510) allow flexible combining of PSSCH transmission with subcarrier spacing $SCS_1$ and feedback transmission with increased subcarrier transmission $SCS_2$ in a same resource pool. Advantageously, there is a tradeoff between the number of PSSCH symbols available in the time interval containing a feedback occasion and the number of PSFCH symbols available for feedback transmission.

Thus, the time interval formats proposed in Figures 4A and 4B (402, 404, 406, 408, 410, 412, 414), with $P$ = 4, have the advantage of allowing more flexible feedback transmission with increased subcarrier transmission $SCS_2$, while having an unchanged time interval format for PSSCH transmission with subcarrier spacing $SCS_1$ (no specification change).

Moreover, the time interval formats proposed in Figures 5A and 5B (500, 502, 504, 506, 508, 510), with $P$ = 3 or $P$ = 2,have the advantage of increasing the number of PSSCH symbols available for PSSCH transmission.

The different time interval formats proposed in Figures 4A, 4B, 5A and 5B achieve different trade-offs between PSSCH performance (e.g. throughput) and PSFCH performance (e.g. reliability, multiplexing capacity).

Advantages with $k_1$ = 4 are similar to the case when $k_1$ = 2. Yet, the time interval formats proposed in Figure 6 (600, 602, 604, 606) with up to 2 PSFCH symbols (and regardless of the $P$ value) have the particularly advantageous property of having the PSFCH occasion included in the last OFDM symbol of $SCS_1$ in the time interval.

PSSCH to PSFCH association

Let us assume a resource pool with $L$ subchannels for PSSCH with $SCS_1$ and a PSFCH period $N$ (which means that feedback occasions occur every $N$ time intervals of time duration corresponding to $SCS_1$). Optionally, PSFCH occurrence is not periodic (that is, values of N may vary). Optionally, the resource pool may comprise subchannels with different subcarrier spacings, such as $SCS_1$, $SCS_2$, $SCS_0$, etc. With this assumption, the resource pool comprises $L$ = $L_1$ subchannels for PSSCH with $SCS_1$ and a PSFCH period $N$ = $N_1$, and the resource pool may further comprise subchannels with $SCS_2$, subchannels with $SCS_0$, etc. Let us take the example where there are $L$ = 4 sub-channels of $N^{SL}_{subChsize} = 12$ PRBs ($SCS_1$) each in the resource pool, $N$ = 2 and $K$ = 1. Let $M'$ be the number of PRBs that can be occupied by PSFCH expressed in $SCS_1$. In the example in Figure 7, $M'$ takes its maximum possible configurable value

$$M' = L * N^{SL}_{subChsize} = 48$$ . Expressed in $SCS_2$, the number of PRBs that can be occupied by PSFCH is at most M = $floor(M'/k_1)$.

Figure 7 describes a configuration (700) as in the current state of the art (NR specifications). In Figure 7, the AGC symbol and the guard symbols are omitted. In a simplified manner, only the OFDM symbols containing PSSCH or PSFCH are represented in this and following figures. Also, PSCCH locations are omitted. Index numbers are a mere example, in Figure 7 and following any different indexing of PSSCH and/or PSFCH resources still stands.

A first group of $L * N$ = 8 PSSCH time-frequency units indexed $m$ = 1 ... $L * N$ is depicted in Fig. 7 and following. Blank spaces, at the end of each of the PSSCH time-frequency units indexed $m$ = {1, 3, 5, 7}, correspond to multicarrier symbols that are not available for data transmission with the subchannel spacing $SCS_1$, The blank space is considered to be included in each of the PSSCH time-frequency units indexed $m$ = {1, 3, 5, 7}. A second, distinct, group of time-frequency units with the subchannel spacing $SCS_1$ is further depicted on the right of the first group of 8 PSSCH time-frequency units. A PSFCH occasion, associated to the first group of 8 PSSCH time-frequency units, is comprised in multicarrier symbols of the second group of time-frequency units that are not available for data transmission with the subchannel spacing $SCS_1$. Sufficient time is required for a UE to receive and process a PSSCH communication to then generate a PSFCH transmission. Therefore, there may be one or more intermediate groups of time-frequency units between the first group of PSSCH time-frequency units and the second group of time-frequency units containing the associated PSFCH occasion. Thus, $K$ is greater than or equal to one, and may preferably be equal to two, three or more. In Figure 7 and following, the different groups of PSSCH time-frequency units may or may not have a same time duration/contain a same number of multicarrier symbols in a same or in several different subcarrier symbols. The time duration of the different groups of PSSCH time-frequency units is not considered to be represented to scale in the figures.

In Fig. 7, the depicted PSFCH occasion contains $M'$ = 48 PRBs split in $L * N$ = 8 sets of $M_{set}$ = 6 PSFCH time-frequency resources (of one PRB each). In the code domain, for PSFCH spanning over one PRB (12 subcarriers), there are 12 possible cyclic shifts CS generating orthogonal codes (CS=0...11), organized in 6 pairs. Let us assume that each i-th pair $q_i$ $i$ = 0 ....5 contains the CS pair ($i$, $i$ + 6). In Figure 7 we assume that $Q'$ = 3 CS pairs are used, for example q = {0,2,4} (any other combination is possible). There are thus $F'$ = 18 PSFCH resources associated with each PSSCH time interval for a total of $F'tot$ = 144 PSFCH time/frequency/code resources for the group.

In other words, a group of $L * N$ = 8 PSSCH logical time-frequency units is associated to a PSFCH occasion containing one single OFDM PSFCH symbol ($R'$ = 1) of the same SCS ($k_1$ = 1) such that:

-    all PSSCH time-frequency units are associated to a same time index $l_0$ (they are all in the same OFDM symbol)

- each PSSCH time-frequency unit is associated to a set of $M_{set} = M'/(L * N) = 6$ different PRBs, different PSSCH time-frequency units being associated to different sets (non-overlapping, disjoint in the frequency domain), and
- each PSSCH time-frequency unit is associated to a same group of $Q' = 3$ cyclic shifts.

The following figures describe different options for associating each PSSCH logical time-frequency units with $SCS_1$ (from a group of $L * N$ logical time-frequency units in $N$ time intervals associated with a feedback occasion, cf Figures 4A, 4B, 5I, 5B and 6) to a group of PSFCH time/frequency/code resources with $SCS_2 = k_1 * SCS_1$, $k_1 > 1$, each feedback occasion containing $R$ PSFCH OFDM symbols with $SCS_2$ where $1 \le R \le R_{max} = P * k_1 - 2$. These associations can apply to any of the compatible time domain time interval structures already described in relation, for instance, to the examples depicted in Figures 4A, 4B, 5A, 5B and 6.

Figure 8 depicts a configuration (800) where the group of $L * N$ PSSCH time-frequency units is split in two sub-groups $SG1 = \{PSSCH1, PSSCH3, PSSCH5, PSSCH7\}$ and $SG2 = \{PSSCH2, PSSCH4, PSSCH6, PSSCH8\}$. PSFCH resources associated to $SG1$ are in a different PFSCH OFDM symbol than the PSFCH resources associated to $SG2$. Thus, although the subcarrier spacing is increased and the number of equivalent PRBs in an OFDM symbol is divided by $k_1$, the PSFCH multiplexing capacity is the same as in the reference case from the state of the art, both for a PSSCH time-frequency unit ($F$) and as a total for the group of $L * N$ PSSCH time-frequency units, without any changes to the assigned cyclic shifts.

Figure 9 depicts a configuration (900) where the group of $L * N$ PSSCH time-frequency units is split in two sub-groups $SG1 = \{PSSCH1, PSSCH3, PSSCH5, PSSCH7\}$ and $SG2 = \{PSSCH2, PSSCH4, PSSCH6, PSSCH8\}$. PSFCH resources associated to $SG1$ have different associated groups of orthogonal cyclic shift pairs than the PSFCH resources associated to $SG2$. All time-frequency units in $SG1$ are associated to $q = \{0,2,4\}$. All time-frequency units in $SG2$ are associated to $q = \{1,3,5\}$. Although PSSCH1 in $SG1$ and PSSCH2 in $SG2$ use the same time-frequency resource, their associated PSFCH resources are different because associated to different groups of CS codes. Thus, although the subcarrier spacing is increased and the number of equivalent PRBs in an OFDM symbol is divided by $k_1$, the PSFCH multiplexing capacity is the same as in the reference case, both for a PSSCH time interval ($F$) and as a total for the group of $L * N$ PSSCH time intervals. In Figure 9, the represented time/frequency feedback resources labelled 1...8 may be the only time/frequency feedback resources in the feedback occasion. In a variant, the feedback occasion may further comprise time/frequency feedback resources not represented on the figure, for example time/frequency feedback resources of another type (e.g. with a subcarrier spacing $SCS_1$, or with a subcarrier spacing other than $SCS_2$).

Figures 10A and 10B depict configurations (1000, 1002) where the group of $L * N$ PSSCH time-frequency units is split in two sub-groups $SG1 = \{PSSCH1, PSSCH3, PSSCH5, PSSCH7\}$ and $SG2 = \{PSSCH2, PSSCH4, PSSCH6, PSSCH8\}$. $SG1$ does not have any associated PSFCH resource with subcarrier spacing $SCS_2$. In a variant, $SG1$ may have an associated PSFCH resource with $SCS_1$ (e.g. a PSFCH as in time interval type (400) from Fig.4). In a variant $SG1$ may not have any associated PSFCH resource (regardless the SCS). For example, transmissions with HARQ enabled only contain PSSCH time-frequency units from $SG2$ and transmissions with HARQ disabled only contain PSSCH time-frequency units from $SG1$. Thus, a reduced number of PSFCH symbols may be used to favor increasing the number of PSSCH symbols in the time interval.

While this solution keeps the multiplexing capacity of PSFCH ($F$) for each of the PSSCH time-frequency units in $SG2$, there is a reduction of the overall multiplexing capacity of PSFCH, $Ftot$, as shown on Figure 10A. This can be compensated by increasing the number of CS codes whenever possible and necessary, as depicted on Figure 10B.

Figures 11A and 11B depict configurations (1100, 1102) where the group of $L * N$ PSSCH time-frequency units is split in two sub-groups $SG1 = \{PSSCH1, PSSCH2, PSSCH5, PSSCH6\}$ and $SG2 = \{PSSCH3, PSSCH4, PSSCH7, PSSCH8\}$. $SG2$ does not have any associated PSFCH resource with subcarrier spacing $SCS_2$. In a variant $SG1$ may not have any associated PSFCH resource (regardless the SCS). For example, transmissions with HARQ enabled may only start in PSSCH time-frequency units from $SG1$ and transmissions with HARQ disabled may only start in PSSCH time-frequency units from $SG2$. In this example, $SG1$ and $SG2$ contain time-frequency units from different subchannels. Thus, a reduced number of PSFCH symbols may be used to favour increasing the throughput of PSSCH transmission.

While this solution keeps the multiplexing capacity of PSFCH ($F$) for each of the PSSCH time-frequency units in $SG2$, there is a reduction of the overall multiplexing capacity of PSFCH, $Ftot$. This can be compensated by increasing the number of CS codes whenever possible and necessary (as depicted in Figure 11B).

Figures 12A and 12B depict configurations (1200, 1202) where the value of $M_{set}$ is reduced by a factor k with respect to the $M'_{set}$ value in the reference Figure 7. $k$ is an integer greater than 1. In this particular example, $k = k_1$. Thus, except for the $M_{set}$ value, there may be no specification change with respect to the configurations currently in the NR specifications, which is conveniently easy to specify. While this solution divides the multiplexing capacity of PSFCH ($F$) for each of the PSSCH time-frequency units by a factor $k$, this can be compensated by increasing the number of CS codes whenever possible and necessary (as depicted in Figure 12B).

Combinations of different features are also possible. An example of configuration (1300) combining a plurality of the above features is depicted in Figure 13, other combinations are also possible. In Figure 13, $k_1 = 4$. The group of $L * N$ PSSCH time-frequency units is split in three sub-groups $SG1 = \{PSSCH1, PSSCH2\}$, $SG2 = \{PSSCH5, PSSCH6\}$ and $SG3 = \{PSSCH3, PSSCH4, PSSCH7, PSSCH8\}$. $SG3$ does not have any associated PSFCH resource with subcarrier spacing $SCS_2$ and PSFCH resources associated to $SG1$ are in a different PFSCH OFDM symbol than the PSFCH resources associated to $SG2$. For example, transmissions with HARQ enabled may only start in PSSCH time-frequency units from $SG1$ or $SG2$ and transmissions with HARQ disabled may only start in PSSCH time-frequency units from $SG3$. Thus, $k_1 = 4$ can be supported with an advantageous time interval format as in the formats (600, 602, 604, 606) in all but the first line of Figure 6.

The different embodiments in Figures 8, 9, 10A, 10B, 11A, 11B, 12A, 12B and 13 provide different trade-offs allowing to compensate for the reduction (by a factor $k_1$) of the number of available subcarriers in an OFDM symbol of fixed bandwidth when increasing the subcarrier spacing by a factor $k_1$.

In the reference case of Figure 7, $L * N$ PSSCH time-frequency units are associated to a global number of $L * N * M_{set} * Q$ different PSFCH time/frequency/code resources of a same SCS, where $M_{set} = M/(L * N)$ with $M$ conveniently configured (usually,

$$M = L * N * N_{RB,SC}^{SL} \text{ subchannels}).$$

In the described case, with the proposed mapping, $L * N$ PSSCH time-frequency units are associated to a global number of $L * N * M_{set} * Q * R/k_1$ different PSFCH time/frequency/code resources of a different (higher) SCS. Solutions allowing to keep at least the same PSFCH multiplexing capacity include

- increasing either $R$, or $Q$, or $R * Q$ such as $Q * R/k_1 \geq 1$
- decreasing either the number of PSSCH time-frequency units associated with PSFCH resources(by choosing subsets of subchannels and/or time positions), or the size of the $M_{set}$, or $L * N * M_{set}$ (e.g. by at least a factor $k_1$), or
- a combination of the above.

Other solutions are also possible, but may lead to a penalty in terms of PSFCH multiplexing capacity.

<u>Proposed configurations</u>

Let us assume that another time interval format based on a subcarrier spacing $SCS_0$ is allowed in the pool such as $SCS_1 = k_0 * SCS_0$ and $k_0 \geq 1$. The time interval in $SCS_0$ may not contain PSFCH occasions and consists of an AGC symbol, followed by data/control and/or pilot transmissions, and a guard of $P_0$ symbols with $P_0 \geq 1$.

This is the case for example in a scenario where LTE transmission with a time interval format (100) as depicted in Figure 1 coexists with an NR transmission.

In this scenario, the resource pool has time intervals of a first type, with subcarrier spacing $SCS_1$, as well as time intervals of a second type, with subcarrier spacing $SCS_0$. The time intervals of first and of second type may be overlapped in the time domain, and a certain (e.g. periodical) alignment of the start of time intervals of first and second type may occur. For example, each start of a time interval of a second type coincides with the start of every $k_0$-th time interval of a first type. The time intervals of the second type comprise multicarrier symbols available for PSSCH transmission. Also, $P_0 \geq 1$ OFDM symbols with $SCS_0$ at the end of each time interval of the second type are not available for PSSCH transmission with $SCS_0$, and one or more feedback occasions are comprised in the time domain in the last $P_0$ OFDM symbols with $SCS_0$. In this configuration, $N$ may be a multiple of $k_0$, and the time-frequency resources of a feedback occasion may be comprised, in the time domain, in a time duration corresponding to at least 1 and at most $R'_{max} = k_1 * k_0 * P_0 - 2$ multicarrier symbols with $SCS_2$.

In Figure 14, one (second type of) time interval in $SCS_0$ (100) is represented on the top of the figure, and two consecutive time intervals (1400) in $SCS_1 = 2 * SCS_0$, where PSFCH occasions with $SCS_2 = 2 * SCS_1$ occur every $N = 2$ time intervals. The different time intervals/parts of time intervals may be used by different UEs for transmission and/or for reception. The figure ignores the frequency domain.

The time interval configuration (1400) represented on the bottom of Figure 14, where $N = k_1 = 2$ and limiting the number of PSFCH symbols to $R_{max} = 2$ advantageously avoids a PSFCH transmission colliding with a symbol of $SCS_0$ in the time domain. Frequency domain overlap is possible at logical association level (but not necessarily assumed during effective transmission) between (part of) the guard symbol with $SCS_0$ and (part of the) PSFCH transmission. The time interval (1400) containing PSFCH occasions may follow any of the formats (600, 602, 604, 606).

In Figure 15, one (second type of) time interval configuration (100) in $SCS_0$ is represented on the top of the figure, and one time interval configuration (400) of a consecutive time interval configuration (400) in $SCS_1 = SCS_0$, where PSFCH occasions with $SCS_2 = 4 * SCS_1$ every $N = 1$ time intervals. Transmission with NR classical time interval format with $SCS_0$ may equally be possible in the same resource pool. The different time intervals/parts of time intervals may be used by different UEs for transmission and/or for reception. The figure ignores the frequency domain.

The time interval configuration (1500) represented on the bottom of Figure 15, where $N = k_1 = 1$ and limiting the number of PSFCH symbols to $R_{max} = 2$ advantageously avoids a PSFCH transmission colliding with a symbol of $SCS_0$ in the time domain. Frequency domain overlap is possible at logical association level (but not necessarily assumed during effective transmission) between (part of) the guard symbol with $SCS_0$ and (part of the) PSFCH transmission. The time interval containing PSFCH occasions may follow any of the formats (402, 404, 500, 502, 508, 510) .

Proposed UE behaviour

It is also proposed a UE performing resource selection and/or transmission and/or reception using a sidelink resource grid as defined in relation to any of the described examples and features, alone or in combination.

Examples of such behaviours includes for example a specific resource selection for PSSCH and associated transmission.

For instance, a UE may be configured to perform a resource selection for PSSCH transmission with $SCS_1$ such as, if the UE is configured with HARQ enabled, it selects resources where the lowest (variant: highest) subchannel index in the allocation corresponds to a PSSCH time-frequency unit in any subgroup of time-frequency units having corresponding PSFCH resources.

For instance, a UE may be configured to perform a resource selection for PSSCH transmission with $SCS_1$ such as, if the UE is configured with HARQ enabled, it selects resources where the lowest (variant: highest) subchannel index in the allocation corresponds to a PSSCH time-frequency unit in the at least one subgroup of time-frequency units not having corresponding PSFCH resources.

For instance, a UE may be configured to perform a PSFCH transmission, by deriving the parameters of the PSFCH transmission with $SCS_2$ based on parameters configured for PSSCH transmission with $SCS_1$ and knowledge of $k_1$ value.

For the actual transmission, as already described, the UE may implement PSFCH symbols natively generated with a subcarrier spacing $SCS_2$, or may equivalently generate PSFCH symbols generated with a subcarrier spacing $SCS_1$ and by only using every $k_1$-th subcarrier (among the subcarriers allocated to/corresponding to PSFCH transmission). In this case, the UE may transmit the whole PSFCH symbol generated with $SCS_1$ (e.g., if $k_1 = 2$, this symbol stands for AGC+PSFCH with $SCS_2$), or only a fraction of this symbol (e.g., if $k_1 = 4$, this symbol is composed in the time domain of 4 identical segments; the UE may discard the first and last segment and only sent the 2nd and 3rd segment (standing for AGC+PSFCH with $SCS_2$)).

For instance, a UE may be configured to select, for a PSFCH transmission, one of two different time interval formats (e.g. either the time interval format (400) in the middle of Figure 15, or the time interval format (1500) at the bottom of Figure 15) depending on a criterion related to a detected or intended transmission with at least one of the time-frequency resources with respect to the first subcarrier spacing $SCS_1$, One of these time interval formats may be defined so that time-frequency resources available for the PSFCH transmission are comprised, in the time domain, in a duration corresponding to at least 1 and at most $R'_{max} = k_1 * k_0 * P_0 - 2$ multicarrier symbols with respect to the second subcarrier spacing $SCS_2$. The criterion may relate for instance to:

- a detection of the presence of a transmission with the second type of time interval (e.g. as at the top of Fig.15) overlapping with the PSFCH transmission (e.g. if LTE presence detected, use PSFCH with higher SCS), and/or
- an intention of transmitting PSSCH data in the same time interval as PSFCH transmission (e.g. if data to transmit, that is, not only PSFCH, than use "normal" time interval format, PSFCH with a same SCS as PSSCH).

For instance, a UE may be configured to blindly search for multiple types of PSFCH transmission (e.g. both with $SCS_1$ and $SCS_2$).

For instance, a UE-A may be configured to receive PSFCH according to the method from UE-B, and using the type of received PSFCH ($SCS_1$, $SCS_2$) as an input to its resource selection process for transmission to UE-B (indirect information on LTE presence detected by its intended receiver UE-B).

**Claims**

1. A communication method implemented in a device-to-device communication system for a transmission and/or a reception of multicarrier radio signals, the communication method using a resource pool for said transmission and/or reception,

   the resource pool being partitioned, in the time domain, in time intervals, each time interval comprising X multicarrier symbols with respect to a first subcarrier spacing $SCS_1$, at least a part of the X multicarrier symbols being available for data transmission in each time interval,
   the resource pool being partitioned, in the frequency domain, in $L_1$ subchannels with respect to the first subcarrier spacing $SCS_1$,
   the resource pool comprising sets of $N_1 * L_1$ time-frequency units, each set spanning over $N_1$ time intervals and over $L_1$ subchannels with respect to the first subcarrier spacing $SCS_1$, each set being associated to a feedback occasion comprised, in the time domain, within P multi-

carrier symbols with respect to the first subcarrier spacing $SCS_1$ not available for data transmission with respect to the first subcarrier spacing $SCS_1$ such as:

the feedback occasion comprises time-frequency resources with respect to a second subcarrier spacing $SCS_2$, with $SCS_2 = k_1 * SCS_1$ and $k_1 > 1$, that are comprised, in the time domain, in a duration corresponding to in at least one and at most $R_{max}$ multicarrier symbols with respect to the second subcarrier spacing $SCS_2$, where $R_{max} = k_1 * P - 2$, where the time-frequency resources are available for a feedback transmission

the feedback occasion starts at least after the end of a first guard time $guard_1$ after a multicarrier symbol available for data transmission with respect to the first subcarrier spacing $SCS_1$, and the feedback occasion ends at least before a second guard time $guard_2$ before the start time of another multicarrier symbol available for data transmission with respect to the first subcarrier spacing $SCS_1$.

2. The method of claim 1, wherein

a given set of $N_1 * L_1$ time-frequency units is divided in a plurality of sub-sets, and wherein at least a first sub-set of the plurality of sub-sets is associated to a set of time-frequency resources of the feedback occasion associated to the given set,

while at least a second sub-set of the plurality of sub-sets is not associated to any time-frequency resource, with respect to the second subcarrier spacing $SCS_2$, of the feedback occasion associated to the given set.

3. The method of claim 1 or 2, wherein

a given set of $N_1 * L_1$ time-frequency units is divided in a plurality of sub-sets,

at least two sub-sets of the plurality of subsets being associated to corresponding sets of time-frequency resources of the feedback occasion associated to the given set, and wherein

each of the corresponding sets of time-frequency resources is contained in a different multicarrier symbol with respect to the subcarrier spacing $SCS_2$ and/or each of the corresponding sets of time-frequency resources is associated to a different group of orthogonal cyclic shift pairs.

4. The method of any one of claims 1 to 3, wherein at least one time-frequency unit from a given set of $N_1 * L_1$ time-frequency units is associated with time-frequency resources comprised in the frequency domain within at most $ceil(N_1 * L_1/k_1)$ different physical resource blocks of the feedback occasion associated to the given set, a physical resource block being formed of twelve consecutive subcarriers with respect to the second subcarrier spacing $SCS_2$.

5. The method of any one of claims 1 to 4, wherein:

each time interval comprising X multicarrier symbols with respect to a first subcarrier spacing $SCS_1$ is a time interval of a first type, the resource pool being partitioned, in the time domain, in time intervals of a second type, each time interval of the second type comprising Y multicarrier symbols with respect to a third subcarrier spacing $SCS_0$, with $SCS_1 = k_0 * SCS_0$ and $k_0 \geq 1$, among the Y multicarrier symbols at least a part being available for data transmission in each time interval of the second type, and $P_0 \geq 1$ multicarrier symbols not being available for transmission in each time interval of the second type and wherein

at least one of the feedback occasions is comprised, in the time domain, within the $P_0$ multicarrier symbols.

6. The method of claim 5, wherein $N_1$ is a multiple of $k_0$ and wherein the time-frequency resources of any feedback occasion are comprised, in the time domain, in a duration corresponding to at least 1 and at most $R'_{max} = k_1 * k_0 * P_0 - 2$ multicarrier symbols with respect to the second subcarrier spacing $SCS_2$.

7. The method of any one of claims 1 to 6, wherein $N_1$ has a different value among the sets of $N_1 * L_1$ time-frequency units.

8. A device-to-device communication system comprising a user equipment configured for transmitting and/or receiving at least one multicarrier radio signal using a resource pool:

the resource pool being partitioned, in the time domain, in time intervals, each time interval comprising X multicarrier symbols with respect to a first subcarrier spacing $SCS_1$, at least a part of the X multicarrier symbols being available for data transmission in each time interval, the resource pool being partitioned, in the frequency domain, in $L_1$ subchannels with respect to the first subcarrier spacing $SCS_1$, the resource pool comprising sets of $N_1 * L_1$ time-frequency units, each set spanning over $N_1$ time intervals and over $L_1$ subchannels with respect to the first subcarrier spacing $SCS_1$, each set being associated to a feedback occasion comprised, in the time domain, within P multi-

carrier symbols with respect to the first subcarrier spacing $SCS_1$ not available for data transmission with respect to the first subcarrier spacing $SCS_1$ such as:

the feedback occasion comprises time-frequency resources with respect to a second subcarrier spacing $SCS_2$, with $SCS_2 = k_1 * SCS_1$ and $k_1 > 1$, that are comprised, in the time domain, in a duration corresponding to in at least one and at most $R_{max}$ multicarrier symbols with respect to the second subcarrier spacing $SCS_2$, where $R_{max} = k_1 * P - 2$, where the time-frequency resources are available for a feedback transmission, the feedback occasion starts at least after the end of a first guard time $guard_1$ after a multicarrier symbol available for data transmission with respect to the first subcarrier spacing $SCS_1$, and the feedback occasion ends at least before a second guard time $guard_2$ before the start time of another multicarrier symbol available for data transmission with respect to the first subcarrier spacing $SCS_1$.

9. A computer program comprising instructions which, when the program is executed by a processor, cause the processor to carry out the method of any one of claims 1 to 7.

10. A user equipment of the device-to-device communication system of claim 8, the user equipment selecting, from a set of $N_1 * L_1$ time-frequency units with respect to the first subcarrier spacing $SCS_1$, a group of time-frequency units for a data transmission, the time-frequency units in the group being in subchannels with index from $L_{start}$ to $L_{end}$, with $L_{start} \leq L_{end}$, and in time intervals from $T_{start}$ to $T_{end}$, with $T_{start} \leq T_{end}$, wherein

if the user equipment is configured with HARQ enabled for the data transmission, at least the time-frequency unit in subchannel $L_{start}$ and in time unit $T_{start}$ is associated to a set of time-frequency resources of the feedback occasion associated to the set, and
if the user equipment is configured with HARQ disabled for the data transmission, at least the time-frequency unit in subchannel $L_{start}$ and in time unit $T_{start}$ is not associated to any time-frequency resource of the feedback occasion associated to the given set.

11. A user equipment of the device-to-device communication system of claim 8, the user equipment selecting, from a set of $N_1 * L_1$ time-frequency units with respect to the first subcarrier spacing $SCS_1$, a group

of time-frequency units for a data transmission, the time-frequency units in the group being in subchannels with index from $L_{start}$ to $L_{end}$, with $L_{start} \leq L_{end}$, and in time intervals from $T_{start}$ to $T_{end}$, with $T_{start} \leq T_{end}$, wherein

if the user equipment is configured with HARQ enabled for the data transmission, all the time-frequency units in the group are associated to sets of time-frequency resources of the feedback occasion associated to the set, and
if the user equipment is configured with HARQ disabled for the data transmission, the time-frequency units in the group do not have any associated to sets of time-frequency resources in the feedback occasion associated to the set.

12. A user equipment of the device-to-device communication according to claim 8,

wherein the feedback occasion further comprises a first type of time-frequency resources with respect to the first subcarrier spacing $SCS_1$ that may be used for a first type of feedback transmission and that are contained in first multicarrier symbols in the time domain,
wherein the time-frequency resources with respect to the second subcarrier spacing $SCS_2$ are a second type of time-frequency resources that may be used for a second type of feedback transmission and are contained in second multicarrier symbols in the time domain,
wherein the second multicarrier symbols do not overlap, in the time domain, with any of the first multicarrier symbols, and
wherein the user equipment performs a selection step between the first and the second type of feedback transmission, the selection step being based on a criterion related to a detected or intended transmission.

13. The user equipment according to claim 12, wherein the criterion relates to:

a) a detection by the user equipment of a presence of a transmission overlapping with at least one of the first type of time-frequency resources and/or
b) an intention of performing by the user equipment a data transmission on at least one of the first type of time-frequency resources.

14. A user equipment configured to receive a feedback transmission from the user equipment of claim 12 or 13, independently of whether the feedback transmission is of the first or of the second type.

15. The user equipment according to claim 14, further configured to detect an indication, from the type of the received feedback transmission, and to select, from a set of $N_1 * L_1$ time-frequency units with respect to the first subcarrier spacing $SCS_1$, a group of time-frequency units for a further data transmission based on the detected indication.

FIG. 1

EP 4 366 210 A1

**FIG. 2**

FIG. 3

EP 4 366 210 A1

FIG. 4A

FIG. 4B

EP 4 366 210 A1

| AGC | ⊞ |
|---|---|
| PSSCH | ⊡ |
| PSCCH | ⊡ |
| DMRS | ⊠ |
| GUARD | ☐ |
| AGC | ▦ |
| PSFCH | ⊞ |

500

502

504

# FIG. 5A

| AGC | ▨ |
| PSSCH | ▨ |
| PSCCH | ▨ |
| DMRS | ▨ |
| GUARD | ▯ |
| AGC | ▨ |
| PSFCH | ▨ |

506 →

508 →

510 →

**FIG. 5B**

FIG. 6

EP 4 366 210 A1

EP 4 366 210 A1

N=2

M'=48
R'=1

F'tot=M'*R'*Q'=144

700

| | | | 8 |
| PSSCH7 | PSSCH8 | | 7 |
| | | | 6 |
| PSSCH5 | PSSCH6 | | 5 |
| | | | 4 |
| PSSCH3 | PSSCH4 | | 3 |
| | | | 2 |
| PSSCH1 | PSSCH2 | | 1 |

L=4

F'=18
Q'=3
M$_{set}$=6
q={0,2,4}

**FIG. 7**

EP 4 366 210 A1

N=2

M=24
R=2

Ftot=M*R*Q=144

| PSSCH7 | PSSCH8 | | 7 | 8 |
| PSSCH5 | PSSCH6 | | 5 | 6 |
| PSSCH3 | PSSCH4 | | 3 | 4 |
| PSSCH1 | PSSCH2 | | 1 | 2 |

L=4

800

F=18

$M_{set}$=6

Q=3

q={0,2,4}

**FIG. 8**

**FIG. 9**

EP 4 366 210 A1

EP 4 366 210 A1

N=2

M=24
R=1

Ftot=M*R*Q=72

| | | | |
|---|---|---|---|
| PSSCH7 | PSSCH8 | | 8 |
| PSSCH5 | PSSCH6 | | 6 |
| PSSCH3 | PSSCH4 | | 4 |
| PSSCH1 | PSSCH2 | | 2 |

L=4

1000

F=18    q={0,2,4}

Q=3

$M_{set}$=6

FIG. 10A

N=2

M=24
R=1

Ftot=M*R*Q=144

| PSSCH7 | PSSCH8 | | 8 |
| PSSCH5 | PSSCH6 | | 6 |
| PSSCH3 | PSSCH4 | | 4 |
| PSSCH1 | PSSCH2 | | 2 |

L=4

F=32

q={0,1,2,3,4,5}

Q=6

$M_{set}=6$

1002

**FIG. 10B**

FIG. 11A

FIG. 11B

EP 4 366 210 A1

## FIG. 12A

**FIG. 12B**

**FIG. 13**

EP 4 366 210 A1

| | |
|---|---|
| AGC | |
| PSSCH | |
| PSCCH | |
| DMRS | |
| GUARD | |
| AGC | |
| PSFCH | |

100

1400

## FIG. 14

FIG. 15

Europäisches
Patentamt

European
Patent Office

Office européen
des brevets

# EUROPEAN SEARCH REPORT

Application Number

EP 22 30 6672

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2020/022752 A1 (SAMSUNG ELECTRONICS CO LTD [KR]) 30 January 2020 (2020-01-30) * paragraph [0152] – paragraph [0157] * * paragraph [0171] – paragraph [0185] * * paragraph [0217] – paragraph [0229] * * paragraph [0355] – paragraph [0390] * * figures 18-22, 40-44 * | 1-15 | INV. H04L5/00 H04L1/1822 H04L1/1829 H04W4/40 H04W76/14 |
| A | US 2020/099479 A1 (PARK KYUJIN [KR]) 26 March 2020 (2020-03-26) * paragraph [0169] – paragraph [0172] * * paragraph [0212] – paragraph [0229] * * paragraph [0235] – paragraph [0241] * * figures 17-23 * | 1-15 | |

TECHNICAL FIELDS
SEARCHED      (IPC)

H04L
H04W

The present search report has been drawn up for all claims

| Place of search | Date of completion of the search | Examiner |
|---|---|---|
| The Hague | 13 April 2023 | Amadei, Davide |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 30 6672

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2023

| Patent document cited in search report | | Publication date | Patent family member(s) | | Publication date |
|---|---|---|---|---|---|
| WO 2020022752 | A1 | 30-01-2020 | CN | 112740612 A | 30-04-2021 |
| | | | EP | 3808023 A1 | 21-04-2021 |
| | | | KR | 20210024000 A | 04-03-2021 |
| | | | US | 2020029318 A1 | 23-01-2020 |
| | | | WO | 2020022752 A1 | 30-01-2020 |
| US 2020099479 | A1 | 26-03-2020 | CN | 110943809 A | 31-03-2020 |
| | | | US | 2020099479 A1 | 26-03-2020 |

EPO FORM P0459

For more details about this annex : see Official Journal of the European Patent Office, No. 12/82